# FASCICULE DE BREVET EUROPEEN

(11) **EP 2 599 145 B1**
(45) Date de publication et mention de la délivrance du brevet: **04.03.2015**
(21) Numéro de dépôt: 11737940.4
(22) Date de dépôt: 22.07.2011
(51) Int. Cl.: H01M 2/16, H01M 10/052, H01M 10/0565, H01M 10/0566, H01M 10/0525

(54) **MEMBRANE MINERALE A ELECTROLYTE POUR DISPOSITIFS ELECTROCHIMIQUES, ET DISPOSITIFS ELECTROCHIMIQUES LA COMPRENANT**
ANORGANISCHE ELEKTROLYTMEMBRAN FÜR ELEKTROCHEMISCHE VORRICHTUNGEN UND ELEKTROCHEMISCHE VORRICHTUNGEN DIESELBE UMFASSEND
INORGANIC ELECTROLYTE MEMBRANE FOR ELECTROCHEMICAL DEVICES AND ELECTROCHEMICAL DEVICES COMPRISING THE SAME

(30) Priorité: 27.07.2010 FR 1056178
(43) Date de publication de la demande: 05.06.2013
(73) Titulaire: Commissariat à l'Énergie Atomique et aux Énergies Alternatives, 75015 Paris (FR)
(72) Inventeur: ZANOTTI, Jean-Marc, F-92290 Chatenay-malabry (FR); LAGRENE, Karine, F-75011 Paris (FR)
(74) Mandataire: Ilgart, Jean-Christophe
(86) Numéro de dépôt international: PCT/EP2011/062669
(87) Numéro de publication internationale: WO 2012/013603

(56) Documents cités:
- WO-A1-02/47802
- JP-A- 2007 311 311
- JP-A- 2008 288 091
- JP-A- 2009 212 017
- US-A1- 2006 063 052
- US-A1- 2008 182 174
- US-B1- 6 306 545
- US-B1- 6 586 133

## Description

### DOMAINE TECHNIQUE

L'invention concerne une membrane minérale à électrolyte pour des dispositifs électrochimiques.

L'invention concerne en particulier, une membrane minérale à électrolyte polymère pour des dispositifs électrochimiques.

L'invention concerne, en outre, un dispositif électrochimique comprenant cette membrane minérale à électrolyte, notamment à électrolyte polymère solide.

En particulier, l'invention concerne un accumulateur au lithium, notamment un accumulateur au lithium métal ou un accumulateur lithium-ion comprenant ladite membrane minérale à électrolyte.

Le domaine technique de l'invention peut, de manière générale, être défini comme celui des dispositifs électrochimiques, notamment celui des accumulateurs au lithium et plus précisément celui des accumulateurs au lithium-métal et/ou des accumulateurs lithium-ion comprenant un électrolyte.

### ÉTAT DE LA TECHNIQUE ANTÉRIEURE

Les électrolytes des accumulateurs au lithium métal ou Lithium-ion sont généralement constitués par des sels de lithium dissous dans une matrice polymère d'où le nom d'« électrolyte polymère » ou de « polymère électrolyte ».

Les polymères usuels de ces électrolytes polymères sont des polymères semi-cristallins dans lesquels coexistent des phases amorphes et cristallines.

Ainsi, la matrice polymère des accumulateurs au lithium-métal est-elle généralement constituée par des polymères à base de Poly(Oxyde d'Éthylène) ou POE (« PEO » en anglais), répondant à la formule [CH₂-CH₂-O]ₙ où la valeur de n est par exemple d'environ 3000.

Le POE est un polymère semi-cristallin et le point de fusion du POE pur est d'environ 55°C.

On sait que la conduction ionique et notamment celle des ions Li⁺ a lieu préférentiellement dans la phase amorphe.

L'addition d'un sel de lithium amorphise déjà dans une certaine mesure les polymères semi-cristallins tels que le PEO ce qui est favorable à la conduction ionique ; mais cela demeure cependant insuffisant pour assurer des niveaux de conductivité ionique équivalents à des liquides ou à l'état fondu des polymères.

Par ailleurs, dans les électrolytes polymères, on montre que la conductivité ionique est étroitement liée à la dynamique des chaînes de polymères, cette dynamique étant d'autant plus rapide que la température est élevée.

La conjonction des deux phénomènes décrits dans ce qui précède (à savoir, le fait que la conductivité ionique de l'électrolyte polymère est favorisée par une fraction amorphe accrue d'un polymère tel que le POE et le fait que la conductivité ionique de l'électrolyte polymère augmente avec la température) fait que la conductivité ionique du système POE/Li est bien trop faible pour envisager des applications à température ambiante, notamment dans des unités de puissance.

Par contre, à partir de 60°C à 80°C, la conductivité ionique de ce système peut atteindre 10⁻³ S.cm⁻¹, ce qui est techniquement viable.

Pour des applications dans l'automobile, par exemple, l'accumulateur doit être maintenu aux environs de 80°C.

Cette contrainte est très défavorable du point de vue du rendement énergétique global, limite le domaine d'utilisation des accumulateurs comprenant de tels électrolytes polymères aux équipements lourds tels que les véhicules automobiles et interdit toute application dans le domaine de l'électronique « grand public » et notamment dans les ordinateurs, les lecteurs MP3 et tous les appareils électroniques légers et portables.

De ce fait, afin d'augmenter la conductivité ionique des électrolytes polymères à polymères semi-cristallins, tels que le POE, à température ambiante, on cherche à augmenter encore la proportion de phase amorphe de ces polymères.

Plusieurs méthodes telles que l'incorporation de plastifiants dans le polymère, l'utilisation de copolymères à blocs dérivés du POE ou l'addition au polymère de charges minérales de taille nanométrique telles que des nanoparticules de céramique permettent d'accroître la fraction de phase amorphe et d'augmenter ainsi la conductivité ionique.

Cependant, toutes ces méthodes, qui visent à accroître la fraction amorphe des polymères semi-cristallins ne permettent d'atteindre qu'une conductivité encore trop faible.

Le document US-B2-7,641,997 concerne une membrane conductrice ionique qui comporte une matrice comprenant un réseau ordonné de canaux creux et un électrolyte nanocristallin contenu dans ces canaux.

Les canaux ont des extrémités ouvertes et leur largeur est de 1000 nanomètres ou moins, de préférence de 60 nanomètres ou moins, de préférence encore de 10 nanomètres ou moins. Les canaux peuvent être alignés perpendiculairement à la surface de la matrice et la longueur des canaux peut aller de 100 nanomètres à 1000 micromètres.

L'électrolyte a une granulométrie de 100 nm ou moins, de préférence de 1 à 50 nm.

La matrice peut être en un oxyde tel que la silice ou l'alumine ou bien en silicium.

L'électrolyte nanocristallin peut être un électrolyte qui conduit les ions oxygènes et qui comprend un oxyde et un dopant métallique tel que de la zircone dopée par un métal ou bien l'électrolyte conduit les protons et comprend de la cérine dopée par un métal. Dans une forme de réalisation, la matrice est en silice, et l'électrolyte est un électrolyte qui conduit les ions oxygène constitué par de la zircone dopée à l'yttrine ou à l'yttrium (YSZ).

Dans ce document, bien qu'il soit indiqué que la conductivité ionique de la membrane est améliorée, il n'y est jamais question de la conduction d'ions alcalins tels que les ions Lithium. En outre, l'électrolyte nanocristallin de ce document n'est pas un électrolyte polymère car il est constitué exclusivement de nanoparticules minérales telles que des particules d'YSZ qui ne sont pas emprisonnées dans un polymère organique, notamment un polymère semi-cristallin tel que le POE.

Enfin, le domaine d'application des membranes conductrices ioniques de ce document ne concerne pas les accumulateurs et notamment les accumulateurs au lithium. En effet eu égard à leur structure, ces membranes ne conviendraient pas pour une mise en oeuvre dans ces accumulateurs.

Le document de F. Vullum et D. Teeters « Investigation of lithium battery nanoelectrode arrays and their component nanobatteries », Journal of Power Sources 146, (2005), 804-808, décrit la fabrication d'un accumulateur constitué d'un assemblage de « nano-accumulateurs » au lithium.

En utilisant des membranes en alumine ayant des pores d'un diamètre de 200 nm, un diamètre de 13 mm, et une épaisseur de 60 µm (il s'agit de membranes de filtration Whatman Anodisc^{®}), les pores de la membrane sont remplis à environ un tiers d'un électrolyte constitué par du POE complexé par du triflate de lithium à un rapport oxygène sur lithium de 15/1, et le reste du volume des pores est rempli d'un « ambigel » de V₂O₅ formant la cathode.

Dans ce document, on cherche essentiellement à préparer un nano-accumulateur et non une membrane à électrolyte polymère solide.

La taille des pores ne se situe pas dans une gamme nanométrique assurant un nanoconfinement.

Le but principal recherché dans ce document est de réduire la taille des accumulateurs et non d'améliorer la conductivité ionique des électrolytes polymères. Dans ce document, on recherche plutôt une amorphisation du polymère et non un abaissement de son point de fusion par confinement.

Le document JP-A-2008 288091 divulgue un séparateur pour batterie secondaire au lithium, ledit séparateur étant constitué d'un corps mésoporeux en silice dont les pores sont imprégnés d'un électrolyte polymère auquel on ajoute un sel de lithium.

Il n'y a pas véritablement, dans ce document, de membrane poreuse en silice mésoporeuse comprenant deux surfaces principales séparées par une épaisseur.

Ensuite, il n'y a surtout aucune mention ni aucune suggestion dans ce document que la silice mésoporeuse de D1 comporte des pores ou canaux traversant ouverts à leurs deux extrémités, orientés dans le sens de l'épaisseur de la membrane, tous substantiellement parallèles, sur la totalité de l'épaisseur de la membrane.

Un effet Gibbs-Thomson, et éventuellement un transport unidimensionnel (1D) de l'électrolyte depuis une première surface principale vers une deuxième surface principale ou depuis une deuxième surface principale vers une première surface principale, ne sont ni mentionnés ni suggérés pour l'électrolyte de ce document, et le corps en silice mésoporeuse de ce document ne possède donc pas les caractéristiques intrinsèques permettant d'obtenir cet effet Gibbs-Thomson et ce transport unidimensionnel.

Le document US-B1-6,586,133 décrit une nano-batterie ou micro-batterie comprenant une membrane poreuse nano-moléculaire ou micro-moléculaire, dont les pores sont remplis d'un électrolyte polymère solide contenant un sel ionique approprié.

Un effet Gibbs-Thomson, et éventuellement un transport unidimensionnel (1D) de l'électrolyte depuis une première surface principale vers une deuxième surface principale, ou depuis une deuxième surface principale vers une première surface principale, ne sont ni mentionnés ni suggérés pour l'électrolyte de ce document, et la membrane poreuse de ce document ne possède donc pas, *de facto,* les caractéristiques intrinsèques permettant d'obtenir cet effet Gibbs-Thomson et ce transport unidimensionnel.

Le document US-B1-6,306,545 divulgue des séparateurs pour cellules électrochimiques comprenant une couche microporeuse de pseudo-boehmite, cette couche étant imprégnée d'un polymère conducteur ionique.

Il n'y a aucune mention ni aucune suggestion dans ce document que, la couche microporeuse comporte des pores ou canaux traversant ouverts à leurs deux extrémités, orientés dans le sens de l'épaisseur de la membrane, tous substantiellement parallèles, sur la totalité de l'épaisseur de la membrane.

Un effet Gibbs-Thomson, et éventuellement un transport unidimensionnel (1D) de l'électrolyte depuis une première surface principale vers une deuxième surface principale, ou depuis une deuxième surface principale vers une première surface principale, ne sont ni mentionnés ni suggérés pour l'électrolyte de ce document, et la couche microporeuse de ce document ne possède donc pas, *de facto,* les caractéristiques intrinsèques permettant d'obtenir cet effet Gibbs-Thomson et ce transport unidimensionnel.

Le document JP-2009 212017 A et le document JP A 2007 311311 divulguent des conducteurs ioniques composés d'une membrane inorganique poreuse ou d'un film poreux inorganique à base d'oxyde de métal dont les pores sont remplis d'un électrolyte sous forme de liquide ionique.

Un effet Gibbs-Thomson, et éventuellement un transport unidimensionnel (1D) de l'électrolyte depuis une première surface principale vers une deuxième surface principale, ou depuis une deuxième surface principale vers une première surface principale, ne sont ni mentionnés ni suggérés pour les électrolytes de ces deux documents japonais, et la membrane inorganique poreuse ou le film poreux inorganique de ces documents ne possèdent donc pas *de facto* les caractéristiques intrinsèques permettant d'obtenir cet effet Gibbs-Thomson et ce transport unidimensionnel.

Le document WO-A1-02/47802 décrit une membrane céramique poreuse conductrice de cations ou de protons et infiltrée par un liquide ionique.

La taille de pore mentionnée dans ce document est très large.

En outre, il n'y a aucune mention ni aucune suggestion dans ce document que, la membrane céramique comporte des pores ou canaux traversant ouverts à leurs deux extrémités, orientés dans le sens de l'épaisseur de la membrane, tous substantiellement parallèles, sur la totalité de l'épaisseur de la membrane.

Un effet Gibbs-Thomson, et éventuellement un transport unidimensionnel (1D) de l'électrolyte depuis une première surface principale vers une deuxième surface principale, ou depuis une deuxième surface principale vers une première surface principale, ne sont ni mentionnés ni suggérés pour l'électrolyte de ce document, et la membrane de ce document ne possède donc pas les caractéristiques intrinsèques permettant d'obtenir cet effet Gibbs-Thomson et ce transport unidimensionnel.

Il existe donc, au vu de ce qui précède, un besoin pour un électrolyte, et en particulier pour un électrolyte polymère, destiné notamment à une utilisation dans un accumulateur au lithium, tel qu'un accumulateur au lithium-métal, ou lithium-ion, qui permette d'améliorer les performances des électrolytes polymères existants.

Il existe, en particulier, un besoin pour un électrolyte, et en particulier pour un électrolyte polymère, qui présente une bonne conductivité ionique à température ambiante, par exemple pouvant atteindre une valeur de 10⁻³ S/cm.

Le but de la présente invention est de fournir un électrolyte, et en particulier un électrolyte polymère, qui réponde entre autres à ces besoins.

Le but de la présente invention est encore de fournir un électrolyte, et en particulier un électrolyte polymère qui ne présente pas les inconvénients, défauts, limitations et désavantages des électrolytes de l'art antérieur et qui résolve les problèmes des électrolytes, et en particulier des électrolytes polymères de l'art antérieur, notamment quant aux performances, et notamment à la conductivité ionique insuffisante à la température ambiante.

### EXPOSÉ DE L'INVENTION

Ce but, et d'autres encore, sont atteints, conformément à l'invention par une membrane minérale à électrolyte dans laquelle :
- la membrane est une membrane poreuse en un oxyde de métal ou de métalloïde isolant électrique comprenant une première surface principale et une deuxième surface principale séparées par une épaisseur ;
- des pores ou canaux traversants ouverts à leurs deux extrémités, d'une largeur inférieure ou égale à 1000 nm, de préférence inférieure ou égale à 100 nm, orientés dans le sens de l'épaisseur de la membrane et tous substantiellement parallèles sur la totalité de l'épaisseur de la membrane relient la première surface principale et la deuxième surface principale ; et
- un électrolyte est confiné dans les pores de la membrane; un effet Gibbs-Thomson, et éventuellement un transport unidimensionnel (1D) dudit électrolyte depuis la première surface principale (1) vers la deuxième surface principale (2) ou depuis la deuxième surface principale (2) vers la première surface principale (1) étant obtenu(s) dans ledit électrolyte.

Ledit électrolyte peut être un électrolyte qui comprend au moins un composé comprenant une fraction cristalline pour toute température inférieure à 100°C, et notamment à température ambiante, avant qu'il ne soit confiné dans les pores de la membrane. Dans ce cas, le gain de performance du dispositif tel qu'un accumulateur comprenant la membrane selon l'invention est obtenu par la diminution du point de fusion de l'électrolyte sous l'effet du confinement nanométrique, et donc par l'augmentation des propriétés de transport (coefficient de diffusion des électrolytes).

Ou bien ledit électrolyte peut être un électrolyte comprenant au moins un composé liquide ou amorphe en-dessous de 100°C, et notamment à température ambiante, avant qu'il ne soit confiné dans les pores de la membrane et qui demeure liquide ou amorphe lorsqu'il est confiné dans les pores de la membrane.

Dans ce cas, le gain de performance du dispositif tel qu'un accumulateur comprenant la membrane selon l'invention est obtenu par la conduction 1D. Dans ce cas aussi, la contrainte de tenue mécanique de l'électrolyte (sa viscosité) a été transférée à la membrane de confinement.

Généralement, l'électrolyte est constitué par ledit au moins un composé comprenant une fraction cristalline, ou amorphe ou liquide, et éventuellement par au moins un sel conducteur.

Par température ambiante, on entend généralement une température de 15°C à 30°C, par exemple de 20°C à 25°C.

Par substantiellement parallèles au sens de l'invention, on entend que ces canaux présentent une mosaïcité d'orientation qui n'excède pas 10%.

De préférence, lesdits canaux sont parallèles.

Par fraction cristalline, on entend généralement que ce composé comprend une phase ordonnée avec un ordre à longue distance, par opposition à une phase amorphe qui est une phase sans ordre à longue distance.

Avantageusement, ladite fraction cristalline représente au moins 1% en masse, de préférence au moins 10% en masse du au moins un composé, de préférence encore au moins 20%, mieux au moins 30% en masse du au moins un composé et avantageusement jusqu'à 50%, 80%, 90% et même jusqu'à 100% en masse du au moins un composé.

Avantageusement, la première et la deuxième surfaces principales sont planes et parallèles, la membrane est une membrane planaire et les pores ou canaux sont substantiellement alignés, ou alignés, perpendiculairement à ladite surface.

Comme on l'a déjà précisé plus haut, les pores sont des pores débouchants à leurs deux extrémités situées respectivement au niveau de la première et la deuxième surfaces principales.

Les pores ou canaux sont tous substantiellement parallèles ou parallèles sur la totalité de l'épaisseur de la membrane. Les pores ou canaux ne communiquent pas dans l'intérieur de la membrane. Les pores ou canaux ne sont en aucune manière reliés à l'intérieur de la membrane. Chacun des pores ou canaux est séparé, distinct, isolé des autres canaux entre la première surface principale et la seconde surface principale.

Chacun des pores ou canaux est totalement indépendant des autres pores ou canaux.

De ce fait chacun des canaux ou pores ne présente aucune chicane, coude, jonction, embranchement, tortuosité, ou un quelconque « labyrinthe » susceptible d'empêcher un transport 1D pur.

En outre les parois internes des pores ou canaux sont généralement rectilignes, lisses, nettes, sans aspérités, saillies et ne comportent aucune surface susceptible de bloquer le transport de l'électrolyte et d'empêcher là encore un transport 1D pur.

Avantageusement, les pores ou canaux ont une largeur de 10 nm à 1000 nm, de préférence de 10 nm à 100 nm, de préférence encore de 20 nm à 50 nm, mieux de 30 nm à 40 nm.

Avantageusement, les pores ou canaux sont des pores cylindriques.

Avantageusement, lesdits pores cylindriques ont une section circulaire ou substantiellement circulaire ou une section en ellipse.

Par substantiellement circulaire, on entend généralement que la forme de la section tout en conservant globalement la forme d'un cercle peut présenter des irrégularités, imperfections.

La largeur des pores ou canaux correspond à la plus grande dimension de la section des pores ou canaux qui correspond au diamètre dans le cas de pores ou canaux de section circulaire et au grand axe dans le cas de pores ou canaux de section en ellipse.

Avantageusement, les pores ou canaux ont une longueur de 100 nm à 900 µm, de préférence de 1 µm à 800 µm, de préférence encore de 1 µm à 500 µm, mieux de 100 µm à 300 µm.

Avantageusement, les canaux ou pores sont disposés selon un motif régulier, par exemple en rangées ou selon une matrice.

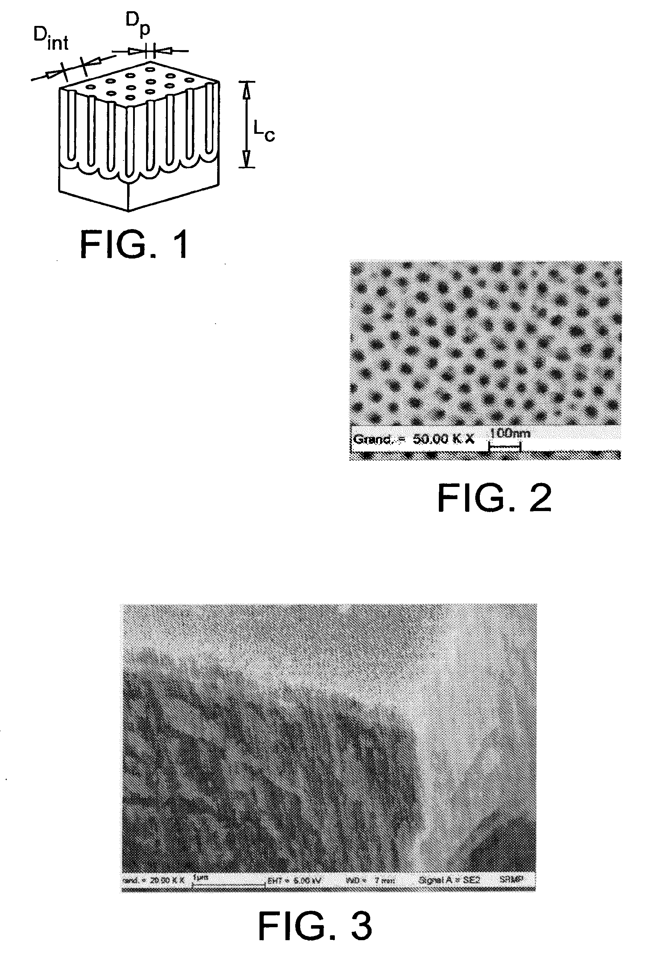

Plus précisément, ce sont les extrémités, orifices débouchants de ces canaux ou pores au niveau de chacune des surfaces qui sont disposées selon un motif régulier sur la première surface principale et/ou la deuxième surface principale (voir les figures 1 et 13).

Avantageusement, la distance interpores est de l'ordre de grandeur de, de préférence égale à, la largeur, par exemple le diamètre, des pores.

Avantageusement, la distance interpores est de 10 nm à 1000 nm, de préférence de 10 nm à 100 nm, de préférence encore de 20 nm à 50 nm, mieux de 30 nm à 40 nm.

Avantageusement, l'oxyde de métal ou de métalloïde isolant électrique est choisi parmi l'alumine, de préférence l'alumine anodique poreuse ou AAO, et la silice.

Le composé comprenant une fraction cristalline peut être choisi parmi les liquides ioniques cristallins ou semi-cristallins (avant confinement) pour toute température inférieure à 100°C, et notamment à la température ambiante.

On peut définir généralement les liquides ioniques comme des sels liquides comprenant un cation et un anion. Les liquides ioniques sont ainsi généralement composés d'un cation organique volumineux, leur donnant une charge positive, auquel est associé un anion inorganique qui leur donne une charge négative. En outre, les liquides ioniques sont, comme leur nom l'indique, généralement liquides dans l'intervalle de température 0°C à 200°C, notamment autour de la température ambiante, et ils sont ainsi souvent dénommés « RTIL » (ou « Room Temperature Ionic Liquids » en langue anglaise).

La diversité des liquides ioniques est grande.

Ainsi, le cation C⁺ du liquide ionique peut-il être choisi parmi les cations hydroxonium, oxonium, ammonium, amidinium, phosphonium, uronium, thiouronium, guanidinium, sulfonium, phospholium, phosphorolium, iodonium, carbonium ; et les cations hétérocycliques tels que les cations pyridinium, quinolinium, isoquinolinium, imidazolium, pyrazolium, imidazolinium, triazolium, pyridazinium, pyrimidinium, pyrrolidinium, thiazolium, oxazolium, pyrazinium, piperazinium, pipéridinium, pyrrolium, pyrizinium, indolium, quinoxalinium, thiomorpholinium, morpholinium, et indolinium ; et les formes tautomères de ceux-ci.

L'anion du liquide ionique peut être choisi parmi les halogénures tels que Cl-, BF₄⁻, B(CN)₄⁻, CH₃BF₃⁻, CH₂CHBF₃⁻, CF₃BF₃⁻, m-CₙF₂ₙ₊₁BF₃⁻ où n est un entier tel que 1 ≤ n ≤ 10, PF₆⁻, CF₃CO₂⁻, CF₃SO₃⁻, N(SO₂CF₃)₂⁻, N(COCF₃)(SOCF₃)⁻, N(CN)₂⁻, C(CN)₃⁻, SCN⁻, SeCN⁻, CuCl₂⁻, et AlCl₄⁻.

Des exemples de liquides ioniques sont donnés dans le document FR-A-2 935 547 à la description duquel on pourra se référer.

Ou bien le composé comprenant une fraction cristalline peut être choisi parmi les polymères semi-cristallins ou cristallins (avant confinement) pour toute température inférieure à 100°C, et notamment à la température ambiante.

Lorsque l'électrolyte comprend un composé liquide ou amorphe, le composé liquide ou amorphe de l'électrolyte peut être choisi parmi les polymères liquides ou amorphes (avant confinement).

Les composés de l'électrolyte liquides ou amorphes à une température inférieure à 100°C, par exemple à température ambiante, sont de préférence choisis parmi les polymères, notamment les oligomères, de POE, et leurs dérivés.

Lorsque l'électrolyte comprend un polymère qu'il soit cristallin, semi-cristallin, liquide ou amorphe, l'électrolyte, qui peut éventuellement comprendre en outre un sel conducteur est alors généralement appelé électrolyte polymère ou polymère électrolyte.

Le polymère, avant qu'il ne soit confiné, aussi appelé polymère non-confiné, est souvent désigné par l'appellation de polymère « en volume » ou « polymère bulk ».

Par polymère au sens de l'invention, on entend aussi bien les homopolymères que les copolymères que les oligomères.

Avantageusement, le polymère semi-cristallin ou cristallin, ou liquide ou amorphe, est choisi parmi les polymères qui permettent une bonne solvatation des ions de métaux alcalins tels que Li.

Avantageusement, le polymère semi-cristallin ou cristallin ou liquide ou amorphe est choisi parmi les homopolymères et copolymères d'oxyde d'éthylène et leurs dérivés.

Les homopolymères et copolymères d'oxyde d'éthylène et leurs dérivés, semi-cristallins ou cristallins présentent généralement une cristallinité d'au moins 10%.

Avantageusement, le polymère a une masse molaire inférieure ou égale à 100 kg/mol.

Avantageusement, le polymère a une masse molaire inférieure à sa masse d'enchevêtrement.

La masse d'enchevêtrement est généralement définie comme la masse à partir de laquelle la dynamique du polymère se situe dans un régime de reptation.

La masse d'enchevêtrement du POE est de 3600 g/mol.

Avantageusement, le polymère est choisi parmi les poly(oxyde d'éthylène)s de masse molaire inférieure à 3600 g/mol, de préférence de 44 à 2000 g/mol.

Avantageusement, l'électrolyte peut comprendre en outre un sel conducteur ionique.

Avantageusement, le sel conducteur ionique est un sel de lithium.

Avantageusement, le sel de lithium peut être choisi par exemple parmi LiAsF₆, LiClO₄, LiBF₄, LiPF₆, LiBOB, LiODBF, LiR_{F}SO₃ par exemple LiCF₃SO₃, LiCH₃SO₃, LiN(R_{F}SO₂)₂ par exemple LiN(CF₃SO₂)₂ (LiTFSI) ou LiN(C₂F₅SO₂)₂ (LiBETI), LiC(R_{F}SO₂)₃, par exemple LiC(CF₃SO₂)₃ (LiTFSM), dans lesquels R_{F} est choisi parmi un atome de fluor et un groupement perfluoroalkyle comprenant de 1 à 8 atomes de carbone, LiTFSI est l'acronyme de lithium bis(trifluorométhylsulfonyl)imide, LiBOB celui de lithium bis(oxalato)borate, Li ODBF celui de lithium oxalyl difluoroborate, LiBETI celui de lithium bis(perfluoroéthylsulfonyl)imide, et LiTFSM celui de lithium tris(trifluoromethylsulfonyl)-méthylure.

Avantageusement, la concentration en sel conducteur ionique, lorsqu'il est présent, dans l'électrolyte et en particulier dans l'électrolyte polymère, peut être de 1 à 50% en masse par rapport à la masse de l'électrolyte, par exemple de l'électrolyte polymère.

Avantageusement, l'électrolyte est un électrolyte polymère qui comprend un poly(oxyde d'éthylène) semi-cristallin (avant confinement) et un sel de lithium, de préférence le LiTFSI.

Avantageusement, le rapport des atomes de lithium aux atomes d'oxygène des groupements éthers du polyéthylène glycol est inférieur ou égal à 1/8, par exemple ce rapport peut être de 1/8, 1/12 ou 1/16.

Avantageusement, l'électrolyte, tel qu'un électrolyte polymère remplit totalement les pores ou canaux.

Il est à noter que l'électrolyte, tel qu'un électrolyte polymère ne se présente pas sous la forme de particules, notamment de nanoparticules discrètes mais bien sous la forme d'une masse continue et compacte remplissant chacun des pores et en contact avec les parois de ceux-ci.

Avantageusement, l'électrolyte polymère est confiné dans les pores en immergeant la membrane poreuse constituée d'un oxyde de métal ou de métalloïde isolant électrique dans un excès d'électrolyte polymère fondu ou liquide, de préférence sous vide et à chaud au-delà du point de fusion de l'électrolyte.

On peut dire que l'électrolyte polymère liquide pénètre la structure poreuse par simple capillarité.

La membrane minérale à électrolyte, par exemple à électrolyte polymère selon l'invention n'a jamais été décrite dans l'art antérieur tel que représenté notamment par les documents cités plus haut.

La membrane à électrolyte, par exemple à électrolyte polymère selon l'invention ne présente pas les défauts des électrolytes, par exemple des électrolytes polymères de l'art antérieur et apporte une solution aux problèmes posés par les électrolytes, par exemple les électrolytes polymères, de l'art antérieur.

La membrane minérale à électrolyte selon l'invention présente au moins deux caractéristiques essentielles, à savoir d'une part la présence de pores de section nanométrique qui confinent un électrolyte, par exemple un électrolyte polymère et, d'autre part, le fait que ces pores sont des pores traversant substantiellement orientés dans le même sens, voire orientés dans le même sens, à savoir le sens de l'épaisseur de la membrane et tous substantiellement parallèles, voire parallèles.

La combinaison de ces deux caractéristiques confère à la membrane à électrolyte, par exemple à électrolyte polymère, selon l'invention des propriétés avantageuses et surprenantes notamment quant à sa conductivité ionique à température ambiante.

On peut dire que la membrane à électrolyte, par exemple à électrolyte polymère, selon l'invention du fait de ses deux caractéristiques essentielles permet d'améliorer les performances des électrolytes, et en particulier des polymères électrolytes à température ambiante grâce à la mise en conjonction, combinaison de trois effets à savoir :
(i) le nanoconfinement de l'électrolyte, par exemple de l'électrolyte polymère dû à la taille nanométrique des pores ;
(ii) la conduction ionique unidimensionnelle due à l'orientation uniforme des pores et à leur caractère relativement directionnel, voire directionnel ;
(iii) le transfert à la membrane de la contrainte de tenue mécanique de l'électrolyte, ce qui permet d'utiliser des électrolytes liquides ou de faible poids moléculaire, par exemple des oligomères, et donc d'améliorer significativement la conductivité de l'électrolyte.

Le nanoconfinement, défini généralement par une taille caractéristique des pores de la membrane qui confinent l'électrolyte inférieure ou égale à 1000 nm, de préférence inférieure ou égale à 100 nm, par exemple de 10-50 nm, permet notamment dans le cas des électrolytes polymères de diminuer le point de fusion du polymère par effet Gibbs-Thomson, de façon à ce que la fusion du polymère intervienne de préférence à température ambiante.

Plus généralement, le nanoconfinement a pour effet de diminuer, voire de supprimer totalement la fraction cristalline que ledit composé comporte avant son incorporation dans les pores ou canaux de la membrane, et d'accroître ainsi la conductivité.

On peut dire que le nanoconfinement conduit à une amorphisation partielle ou totale du composé et à un système présentant une mobilité plus grande.

Dans le cas d'un polymère semi-cristallin, tel que le POE, le nanoconfinement va conduire à une amorphisation partielle et avantageusement à une diminution de la température de fusion du polymère.

A l'état liquide, au-delà de son point de fusion, le polymère est généralement 10 à 100000 fois moins visqueux qu'en deçà de son point de fusion.

La conduction unidimensionnelle dans des pores à faible tortuosité fait que les propriétés de transport des électrolytes d'une électrode à l'autre ne sont pas affectées dans la membrane selon l'invention.

Dans le cas où le composé est déjà liquide ou amorphe à une température inférieure à 100°C, et notamment à la température ambiante, c'est cet aspect unidirectionnel 1D qui est prépondérant par rapport à l'aspect de nanoconfinement.

Dans le cas ou l'électrolyte est un électrolyte qui comprend au moins un composé qui comprend une fraction cristalline avant qu'il ne soit confiné dans les pores de la membrane, c'est-à-dire un composé tel qu'un polymère, par exemple un poly(oxyde d'éthylène), cristallin ou semi-cristallin, l'invention met à profit l'effet Gibbs-Thomson. Un tel effet n'est jamais évoqué, mentionné, suggéré et surtout recherché dans l'art antérieur relatif aux membranes minérales à électrolyte.

L'effet Gibbs-Thomson n'est obtenu que lorsque deux conditions sont réunies, à savoir :
1) Un confinement généralement nanométrique aussi appelé nanoconfinement ;
2) Le matériau, composé, nanoconfiné doit être cristallin ou semi-cristallin.

Lorsque ces deux conditions sont réunies on observe - et c'est le cas selon la présente invention - que la fusion, c'est à dire le passage du cristal au liquide, du matériau, composé, confiné intervient à une température plus basse que lorsque ce même matériau, composé est en volume (« bulk »), non confiné.

Ainsi, selon l'invention, par confinement nanométrique d'un électrolyte qui comprend au moins un composé cristallin ou semicristallin, on obtient un électrolyte liquide à une température à laquelle il est habituellement solide et à laquelle il présente donc une mauvaise conductivité.

En outre, selon l'invention on obtient un gain supplémentaire de conductivité dû à un second effet qui est induit par la topologie du réseau poreux de la membrane selon l'invention.

En effet, le fait d'utiliser des pores orientés en « 1D » limite tout effet de tortuosité, toute chicane, toute géométrie « labyrinthique » très néfaste au transport des électrolytes à longue distance, c'est-à-dire d'une électrode à l'autre.

La combinaison de ces deux effets (« Gibbs-Thomson » et transport 1D), conduisant à une amélioration inattendue et importante de la conductivité n'est ni évoquée, ni suggérée dans l'art antérieur.

Par rapport aux électrolytes, et en particulier aux électrolytes polymères de l'art antérieur, les avantages apportés par la membrane selon l'invention se situent essentiellement au niveau des performances, de la sécurité et de la viabilité économique.

En ce qui concerne les performances, la membrane selon l'invention présente les avantages d'avoir une température de fonctionnement généralement autour de la température ambiante et de présenter une conduction quasi-unidimensionnelle.

En ce qui concerne la sécurité, la membrane selon l'invention présente les avantages d'assurer un confinement de l'électrolyte et d'éviter une dissémination de l'électrolyte dans l'environnement en cas de rupture de l'accumulateur -ce qui est particulièrement avantageux dans le cas des électrolytes liquides- et de limiter le phénomène de croissance dendritique et donc les risques d'inflammation spontanée de l'accumulateur.

En ce qui concerne la viabilité économique, la membrane selon l'invention présente l'avantage de permettre une diminution de la quantité de sel conducteur entrant dans la composition de l'électrolyte, en particulier de sel lithium, utilisée ce qui entraîne en conséquence une diminution du coût de l'électrolyte et de l'accumulateur le contenant. De plus comme on l'a précisé plus haut, le phénomène de croissance dendritique et les risques afférents étant limités, la membrane à électrolyte, par exemple à électrolyte polymère selon l'invention, peut voir ses applications étendues à l'électronique portable et/ou « grand public ».

L'invention concerne, en outre, un dispositif électrochimique comprenant une membrane à électrolyte, par exemple à électrolyte polymère telle que décrite plus haut.

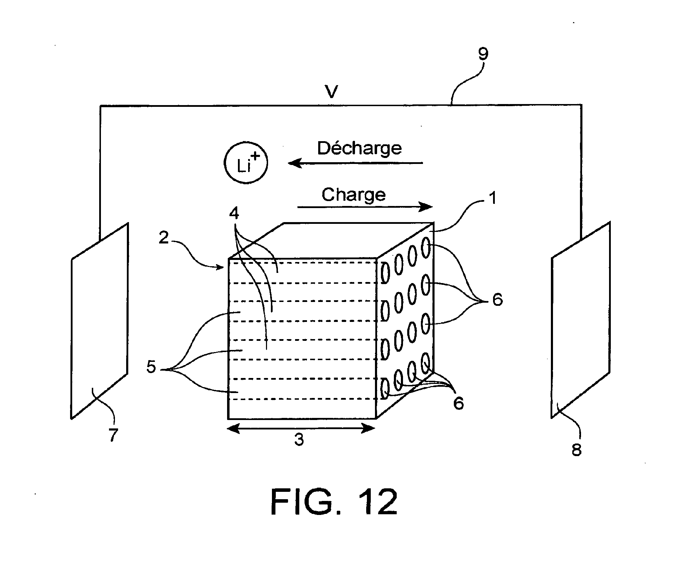

En particulier, l'invention concerne un accumulateur au lithium comprenant une membrane à électrolyte, par exemple une membrane à polymère solide telle que décrite plus haut, une électrode positive, et une électrode négative (Figure 12).

Cet accumulateur au lithium peut être un accumulateur Li-Métal dans lequel l'électrode négative est en Lithium métal ou bien cet accumulateur au lithium peut être un accumulateur Lithium-ion.

Un tel dispositif présente tous les avantages liés de manière inhérente à la mise en oeuvre dans de tels dispositifs de la membrane à électrolyte, par exemple à électrolyte polymère, selon l'invention.

L'invention enfin trait à l'utilisation d'une membrane minérale dans laquelle :
- la membrane est une membrane poreuse en un oxyde de métal ou de métalloïde isolant électrique comprenant une première surface principale (1) et une deuxième surface principale (2) séparées par une épaisseur (3) ;
- des pores ou canaux traversants (4) ouverts à leurs deux extrémités (5,6), d'une largeur inférieure ou égale à 1000 nm, de préférence inférieure ou égale à 100 nm, orientés dans le sens de l'épaisseur (3) de la membrane et tous substantiellement parallèles, sur la totalité de l'épaisseur (3) de la membrane, relient la première surface principale (1) et la deuxième surface principale (2) ;
pour obtenir un effet Gibbs-Thomson dans un électrolyte confiné dans les pores (4) de la membrane, et éventuellement un transport unidimensionnel (1D) dudit électrolyte depuis la première surface principale (1) vers la deuxième surface principale (2) ou depuis la deuxième surface principale (2) vers la première surface principale (1) ;
et dans laquelle ledit électrolyte comprend au moins un composé comprenant une fraction cristalline pour toute température inférieure à 100°C, avant qu'il ne soit confiné dans les pores de la membrane.

De tels électrolytes ont déjà été décrits plus haut.

L'invention va maintenant être décrite de manière plus précise dans la description qui suit, donnée à titre illustratif et non limitatif en référence aux dessins joints dans lesquels :

### BRÈVE DESCRIPTION DES DESSINS

- La Figure 1 est une représentation schématique d'une membrane en alumine anodique poreuse (AAO) ;
- La Figure 2 est une image au microscope électronique à balayage (MEB) de la surface d'une membrane en alumine anodique poreuse (AAO).
   L'échelle indiquée sur la Figure 2 représente 100 nm.
- La Figure 3 est une vue au MEB 3D d'un fragment de membrane en alumine anodique poreuse.
   L'échelle indiquée sur la Figure 3 représente 1 µm.
- La Figure 4 présente des photographies qui montrent l'évolution de la surface d'une plaque d'aluminium au cours de l'anodisation. Les clichés des Figures 4A, 4B et 4C ont été pris à des durées d'anodisation croissantes.
- La Figure 5A est une vue schématique en coupe verticale qui montre la structure de la plaque d'aluminium anodisée de la Figure 4B, avec une couche d'aluminium piégée entre deux films d'alumine et la Figure 5B est une autre photographie de la plaque d'aluminium anodisée de la Figure 4B.
- La Figure 6 présente des images au MEB qui montrent l'ajustement du diamètre final des pores pour une membrane 15V_-5°C_20h_H₂SO₄. La Figure 6A est une image de la membrane initiale, et Dₚ est d'environ 20 nm. La Figure 6B est une image de la membrane après une attaque de 10 minutes et Dₚ est d'environ 23 nm. La Figure 6C est une image de la membrane après une attaque de 30 minutes et Dₚ est d'environ 30 nm. La Figure 6D est une image de la membrane après une attaque de 45 minutes et sa surface est détériorée. L'échelle sur les Figures 6A à 6D représente 100 nm.
- La Figure 7A est un graphique qui donne I(cm⁻¹) en fonction de Q(Å⁻¹) mesurée en Diffusion de Neutrons aux Petits Angles (DNPA) pour une membrane 15V_-5°C_20h_H₂SO₄ soumise à une attaque par une solution d'acide phosphorique à 5% en poids pendant des durées variables à savoir 0 minute (courbe A), 10 minutes (courbe B), 30 minutes (courbe C), et 45 minutes (courbe D).
- La Figure 7B est un graphique qui présente le calcul analytique de la variation I(Q) en fonction de Dp (Rₚ) (pour 3 valeurs de Rp, à savoir 140 nm (courbe C), 120 nm (courbe B), et 100 nm (courbe A), pour Dᵢₙₜ constant à partir du modèle des cylindres orientés.
- La Figure 7C est un graphique qui présente la distance Dₚ (carrés) ou la distance Dᵢₙₜ (triangles) exprimées en nm, en fonction du temps d'attaque (minutes).
- La Figure 8A est un schéma qui montre le principe de la suppression de l'aluminium résiduel.
- La Figure 8B est une photographie qui montre une membrane après l'étape de suppression de l'aluminium résiduel.
- Les Figures 9A et 9B sont des images au MEB respectivement de la face supérieure (comme montrée sur la Figure 8A), et de la face inférieure (comme montrée sur la Figure 8A), d'une membrane 20V_-10°C_20h_H₂SO₄.
   L'échelle indiquée sur les Figures 9A et 9B représente 100 nm ;
- La Figure 10 est un schéma qui montre le principe de l'ouverture de la couche barrière.
- La Figure 11 présente des images au MEB de la face arrière d'une membrane 15V_-5°C_20h_H₂SO₄ immergée dans une solution d'acide phosphorique à 5% en poids qui montrent l'ouverture de la couche barrière à 20 minutes (A), 30 minutes (B), 45 minutes (C) et 1 heure (D).
   L'échelle sur les Figures 11A, 11B et 11D représente 100 nm, et l'échelle sur la Figure 11C représente 200 nm.
- La Figure 12 est un schéma d'un accumulateur comprenant la membrane à électrolyte, en particulier la membrane à électrolyte polymère solide selon l'invention.
   Les ions Li⁺ ne sont mentionnés sur la Figure 12 qu'à titre d'exemple.

### EXPOSÉ DÉTAILLÉ DE MODES DE RÉALISATION PARTICULIERS

Cette description se réfère plus particulièrement à un mode de réalisation dans lequel la membrane minérale à électrolyte est une membrane à électrolyte polymère, notamment la membrane à électrolyte polymère d'un accumulateur au lithium, mais il est bien évident que la description qui suit pourra être facilement étendue, le cas échéant, à toute membrane minérale à électrolyte pouvant être mise en oeuvre dans tout dispositif ou système électrochimique, quel que soit l'électrolyte liquide, amorphe, semi-cristallin ou cristallin.

En outre, la description qui suit est plutôt faite par commodité en relation avec le procédé de préparation de la membrane selon l'invention mais elle contient aussi des enseignements qui concernent la membrane préparée par ce procédé.

Dans ce qui suit, on décrit tout d'abord la préparation de l'électrolyte polymère.

Le polymère de l'électrolyte polymère est généralement un polymère semi-cristallin qui doit pouvoir servir de solvant au cation du sel conducteur tel que le lithium.

Le polymère semi-cristallin de l'électrolyte peut ainsi être choisi parmi tous les polymères comprenant des groupements chimiques montrant une affinité suffisante pour les ions alcalins, notamment pour être en mesure de dissoudre des sels de métaux alcalins.

De préférence, le polymère semi-cristallin est choisi parmi les homopolymères et copolymères d'oxyde d'éthylène.

De préférence encore, le polymère de l'électrolyte est un homopolymère d'oxyde d'éthylène linéaire répondant à la formule [CH₂-CH₂-O]ₙ où la valeur de n est de 1 à 3000, par exemple d'environ 300.

Dans les électrolytes polymères actuels, pour des raisons liées à la tenue mécanique des électrolytes, on utilise généralement des polymères de masses élevées, par exemple dont la masse molaire moyenne en poids M_{w} est supérieure à 100 kg.mol⁻¹.

Les polymères électrolytes à base de POE peuvent ainsi être préparés à partir de polymères de forte masse molaire, allant de 10⁵ à plusieurs millions de grammes par mole, qui confèrent aux polymères électrolytes de bonnes propriétés mécaniques.

Par propriétés mécaniques, on entend ici généralement tenue au cisaillement, à l'étirement et à la compression.

Cependant, dans une membrane telle que celle faisant l'objet de l'invention qui repose sur le principe du confinement de l'électrolyte et en particulier de l'électrolyte polymère dans les pores d'une membrane rigide en oxyde, les propriétés mécaniques peuvent être assurées pour l'essentiel par cette membrane en oxyde poreux et il n'est donc plus nécessaire d'utiliser des polymères de masse molaire très élevée.

Les polymères mis en oeuvre selon l'invention peuvent donc avoir une masse molaire plus faible que dans les électrolytes polymères utilisés jusqu'alors, par exemple des masses molaires inférieures ou égales à 100 kg.mol⁻¹

En outre, il a été montré que des masses molaires faibles améliorent les propriétés de conduction, et il est donc également possible d'optimiser la conduction ionique en utilisant de tels polymères, par exemple des POE, de masse molaire plus faible.

Une gamme de masse molaire se situant en-dessous de la masse d'enchevêtrement du polymère est favorable pour accéder à un régime que l'on peut qualifier de régime de « dynamique rapide du polymère » qui favorise la conduction des ions, en particulier des ions Li⁺.

La masse d'enchevêtrement est un paramètre connu qui peut être facilement déterminé par l'homme du métier pour chaque polymère.

La masse d'enchevêtrement est généralement la masse molaire à partir de laquelle la dynamique du polymère se situe dans un régime de reptation.

Ainsi, la masse d'enchevêtrement du POE (homopolymère) est de 3600 g/mol.

Le sel conducteur de l'électrolyte polymère est généralement un sel de métal alcalin tel qu'un sel de lithium. Par sel de lithium, on entend un sel comportant au moins le cation Li⁺.

Toutefois, d'autres sels, pourraient éventuellement être utilisés, en fonction de l'application recherchée.

Le sel de lithium peut être choisi par exemple parmi LiAsF₆, LiClO₄, LiBF₄, LiPF₆, LiBOB, LiODBF, LiR_{F}SO₃ par exemple LiCF₃SO₃, LiCH₃SO₃, LiN(R_{F}SO₂)₂ par exemple LiN(CF₃SO₂)₂ (LiTFSI) ou LiN(C₂F₅SO₂)₂ (LiBETI), LiC(R_{F}SO₂)₃, par exemple LiC(CF₃SO₂)₃ (LiTFSM), dans lesquels R_{F} est choisi parmi un atome de fluor et un groupement perfluoroalkyle comprenant de 1 à 8 atomes de carbone, LiTFSI est l'acronyme de lithium bis(trifluorométhylsulfonyl)imide, LiBOB celui de lithium bis(oxalato)borate, et LiBETI celui de lithium bis(perfluoroéthylsulfonyl)imide.

Parmi ces sels de lithium, le LiTFSI est souvent utilisé, puisqu'il est parmi ceux qui présentent la meilleure conductivité au sein du POE et de ses dérivés.

La concentration en sel conducteur, par exemple en sel de lithium conducteur, est généralement de 1 à 50% en masse par rapport à la masse totale de l'électrolyte, par exemple de l'électrolyte polymère.

Pour un polymère de POE, le maximum de conductivité est obtenu pour des concentrations correspondant à une proportion de 1 atome de lithium pour 8 atomes d'oxygène (O/Li = 8).

Un polymère électrolyte de référence est donc le P(OE)₈LiTFSI avec M_{w} POE = 100 kg.mol⁻¹ qui est un des polymères électrolytes les plus étudiés.

Il a cependant été mis en évidence que le fait de confiner, conformément à l'invention, ces polymères semi-cristallins, permettait d'abaisser, voire de supprimer la proportion de fraction cristalline tout en présentant une bonne conductivité ionique.

De ce fait, la conductivité sous confinement peut être optimisée en choisissant des polymères électrolytes de plus faibles concentrations en sel, avec par exemple une concentration en sel conducteur, par exemple en sel de lithium conducteur.

Dans le cas des polymères de POE, on pourra ainsi utiliser des concentrations correspondant à une proportion de 1 atome de lithium pour 12 atomes d'oxygène, voire 16 atomes d'oxygène.

De tels polymères sont par exemple le P(OE)₁₂LiTFSI et le P(OE)₁₆LiTFSI.

L'utilisation de polymères électrolytes dont la concentration en sel conducteur, par exemple en sel de lithium est plus faible, présente l'avantage important de réduire le coût de l'électrolyte, et donc celui du dispositif tel qu'une batterie ou accumulateur le comprenant.

Pour préparer l'électrolyte polymère, il est nécessaire de dissoudre le sel conducteur tel qu'un sel de lithium dans une matrice polymère.

La cinétique de dissolution du sel dans la matrice polymère est un paramètre important à prendre en considération pour établir le protocole de préparation de l'électrolyte polymère destiné à être confiné dans les pores de la membrane selon l'invention.

Or, cette cinétique est extrêmement lente, et sans protocole particulier, l'équilibre thermodynamique peut mettre plusieurs années avant d'être atteint.

Un protocole qui permet d'accélérer cette cinétique et d'élaborer le polymère électrolyte est maintenant bien établi, est connu de l'homme du métier et a déjà été décrit dans la littérature.

Le protocole qui est décrit dans ce qui suit concerne plus particulièrement la préparation d'un électrolyte polymère comprenant du POE et un sel de lithium tel que le LiTFSI mais il pourra, le cas échéant, être facilement adapté par l'homme du métier à la préparation de tout électrolyte polymère quel que soit le polymère semi-cristallin et le sel conducteur constituant ces électrolytes polymères.

Le POE et le sel de lithium sont dissous dans un solvant commun. Après un temps d'homogénéisation assez long, par exemple de 1 à 12 heures, le solvant est éliminé par évaporation en pompant sous vide.

Les solvants les plus utilisés pour cette préparation sont l'acétonitrile ou le méthanol.

Des polymères électrolytes sans solvant sont alors obtenus.

Un autre aspect important est que la préparation d'un polymère électrolyte peut, dans certains cas, en fonction de la nature du polymère et/ou du sel conducteur nécessiter des précautions particulières.

Ainsi, les sels de lithium étant extrêmement hygroscopiques, il est nécessaire de sécher sous vide les produits de départ au préalable et de réaliser le mélange du polymère et du sel sous atmosphère inerte, par exemple d'Argon et/ou d'Hélium.

Le polymère, tel que le POE, est parfois purifié par exemple par recristallisation ou filtration, pour éliminer les stabilisants et autres impuretés.

Le protocole de préparation de l'électrolyte polymère qui a été mis au point par les inventeurs assure que les réactifs ou le polymère électrolyte final ne soient, à aucun moment, en contact de l'air et de l'humidité au cours de la préparation.

Une boîte à gants (« BAG ») est utilisée pour la préparation du polymère électrolyte mais il a été fait en sorte que le nombre d'étapes nécessitant la boîte à gants soit réduit.

De façon générale, les sels de lithium sont stockés dans la BAG dont les teneurs en H₂O et O₂ sont contrôlées.

La préparation du polymère électrolyte est réalisée dans un réacteur fermé hermétiquement afin d'assurer une atmosphère contrôlée. Ce réacteur est constitué de deux parties qui peuvent être séparées pour faciliter la récupération de l'échantillon.

Le POE, composé hygroscopique, est initialement pesé à l'extérieur de la BAG, en tenant compte de la masse d'eau qu'il contient. Il est séché sous vide par exemple à 70°C pendant, par exemple, une dizaine d'heures dans le réacteur.

Avant de dissoudre le POE dans de l'acétonitrile anhydre, une circulation d'Hélium est assurée dans le réacteur.

Le sel de lithium LiTFSI disponible par exemple auprès de la société Aldrich est pesé en composition stoechiométrique, et introduit dans un flacon hermétique dans la BAG.

Les étapes suivantes sont effectuées sous une sorbonne.

Le sel de lithium est dissous dans l'acétonitrile avant d'être introduit dans le réacteur à l'aide d'une seringue.

Le réacteur est ensuite isolé pendant toute la durée de la phase d'homogénéisation, par exemple d'une durée de 48 heures à une température, par exemple de 50°C.

Le solvant est ensuite évaporé sous vide par exemple à 70°C, par exemple pendant 70 heures.

L'acétonitrile est un solvant toxique ; il est important de placer un piège à solvant dans le montage avant la pompe à vide pour le récupérer lors de l'étape de séchage de l'échantillon.

A l'issue de la phase de séchage, le réacteur est ouvert en BAG. L'échantillon récupéré y restera stocké.

Simultanément, préalablement, ou postérieurement à la préparation de l'électrolyte polymère poreux décrite plus haut, on prépare une membrane poreuse en un oxyde de métal ou de métalloïde isolant électrique.

Comme matériau de confinement, on utilise de préférence, selon l'invention des membranes d'alumine poreuse (« Anodic Aluminum Oxide » ou « AAO » en langue anglaise) : il s'agit de membranes céramiques (très bon isolant électrique) de quelques centimètres de côté, par exemple de 0,1 à 100 et de quelques centaines de microns d'épaisseur, par exemple de 1 à 800 µm ou de 1 à 500 µm.

La porosité est constituée de pores cylindriques de diamètre nanométrique, mais l'originalité de ce matériau tient au fait que ces pores sont orientés et tous substantiellement parallèles, voire parallèles, sur la totalité de l'épaisseur de la membrane avec un rapport d'anisotropie des canaux c'est-à-dire un rapport longueur/diamètre d'environ 300 µm/30 nm, soit 10⁴.

Sur la Figure 1 est représentée de manière schématique une membrane d'alumine poreuse (« AAO »). La topologie de la membrane (et cela s'applique à toute membrane et non seulement aux membranes en alumine) est définie par le diamètre des pores (Dp), la distance inter-pores (Dᵢₙₜ) et la longueur des canaux (L_{C}).

La Figure 2 est une image prise au microscope électronique à balayage MEB de la surface d'une membrane en « AAO »

La Figure 3 est une vue au microscope électronique à balayage MEB 3D d'un fragment d'une membrane « AAO ». On distingue les pores cylindriques partant de la surface puis traversant le corps de la membrane.

Les paramètres de synthèse utilisés pour préparer les membranes permettent de parfaitement contrôler la topologie de la membrane, en particulier le diamètre des pores et leur longueur.

Il est possible d'obtenir des membranes épaisses de plusieurs centaines de µm, par exemple de 1 µm à 800 µm, aisément manipulables.

Une série de traitements post-synthèse permet d'assurer l'ouverture des pores de chaque côté de la membrane.

Le confinement du polymère est simplement assuré par immersion de la matrice dans un excès de polymère sous vide et à chaud : à l'ordre 0, on peut dire que le polymère liquide pénètre la structure poreuse par simple capillarité.

Dans ce qui suit, on décrit la préparation, synthèse d'une membrane en alumine poreuse plus précisément en alumine anodique poreuse.

L'homme du métier pourra facilement déterminer les protocoles permettant de préparer d'autres membranes poreuses en d'autres oxydes de métal ou de métalloïde isolant électrique.

Pour préparer une membrane poreuse en alumine, on utilise un substrat en aluminium généralement constitué par des plaques de 3 cm sur 5 cm et d'une épaisseur de 2 mm.

L'aluminium est dans un premier temps dégraissé, par exemple à l'acétone avant d'être électropoli, en d'autres termes de subir un polissage électrochimique.

Il est éventuellement possible avant l'électropolissage, de réaliser un traitement de recristallisation de l'aluminium, par exemple à 500°C sous vide pendant 12 heures.

Puis, on procède à l'électropolissage de l'aluminium.

L'électropolissage peut être réalisé dans tout dispositif d'électropolissage connu de l'homme du métier et les conditions de l'électropolissage peuvent être facilement adaptées par l'homme du métier.

Dans le montage d'électropolissage, qui a été plus particulièrement mis en oeuvre, l'électrode reliée au pôle négatif du générateur est constituée d'un fil d'or. L'électrolyte utilisé pour l'électropolissage est un mélange d'acide perchlorique (HClO₄) à 60% avec de l'éthanol (C₂H₅OH) dans un rapport en volume 25/75.

Un potentiel de 40V est appliqué pendant une dizaine de seconde sous vive agitation.

On observe rapidement un effet miroir sur la surface de l'aluminium.

Les échantillons sont ensuite rincés à l'eau distillée.

A l'issue de l'étape d'électropolissage de l'aluminium, on procède à l'anodisation de l'aluminium électropoli.

Tout comme l'électropolissage, l'anodisation peut être réalisée dans tout dispositif d'anodisation connu de l'homme du métier et les conditions de l'anodisation peuvent être facilement adaptées par l'homme du métier.

Le montage d'anodisation qui a été plus particulièrement mis en oeuvre est similaire à celui décrit pour le polissage électrochimique.

La cathode est une électrode de platine et l'aluminium électropoli est placé en position anodique. Un bain thermo-régulé permet de contrôler la température entre -10°C et 25°C.

Les électrolytes utilisés sont de l'acide sulfurique (H₂SO₄ à 10%volt, de l'acide oxalique (C₂O₄H₂ à 0,3 mol.L⁻¹), et de l'acide phosphorique (H₃PO₄ 5%w). Dans ce montage, un ampèremètre a été ajouté afin de suivre l'évolution de l'intensité au cours de l'anodisation.

A titre d'exemple, le protocole, initialement décrit par Masuda et *al.* (H. Masuda et M. Satoh, Japan Journal of Applied Physics, 1996, 35, L 126-129) pour obtenir une membrane d'alumine poreuse avec un réseau hexagonal, a été adapté de la façon suivante :
On effectue une première anodisation de 3 minutes en milieu oxalique à 40V à température ambiante, suivie de la dissolution de la couche d'oxyde pendant 2 heures 30 minutes dans un mélange d'acide chromique (H₂CrO₄ 1,8 %w) et d'acide phosphorique (6%w) à 60°C.
On effectue ensuite une deuxième anodisation de 20 minutes en milieu oxalique à 40V à température ambiante.

La matrice poreuse est ensuite soigneusement rincée à l'eau distillée et séchée sous vide à 80°C quelques heures.

La nomenclature adoptée pour identifier les échantillons se présente sous la forme suivante : [tension d'anodisation] [température] [durée d'anodisation] [électrolyte]. Dans cette nomenclature, l'échantillon de référence est noté : *40V_25°C_20min_C₂O₄H₂*.

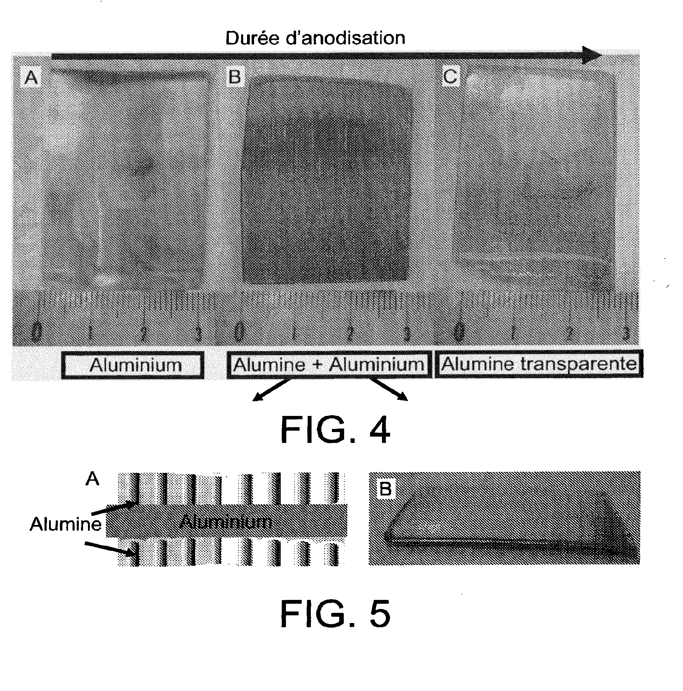

L'évolution d'une plaque d'aluminium au cours de son anodisation est présentée sur la Figure 4 (Figures 4A à 4B) et sur la Figure 5 (Figures 5A et 5B).

L'aluminium initial qui se présente sous la forme d'une plaque de 3 cm sur 5 cm (a) (Figure 4A) est anodisé sur ses deux faces. En fonction de la durée d'anodisation, de l'aluminium résiduel peut être piégé entre les deux films anodiques d'alumine (b) (Figure 4B et Figures 5A et 5B). Si l'anodisation est prolongée jusqu'à ce qu'il n'y ait plus d'aluminium, la plaque finale est essentiellement constituée des deux films d'alumine et est quasi-transparente (c) (Figure 4C).

La matrice poreuse obtenue après anodisation présente la même géométrie que l'aluminium initial et peut donc être facilement manipulée.

A l'issue de l'anodisation, plusieurs traitements peuvent être réalisés sur les membranes en alumine anodique poreuse (« Anodic Aluminium Oxide » ou « AAO » en anglais) ainsi obtenues. Ces traitements sont généralement dénommés traitements de post-anodisation.

Un ou plusieurs post-traitement(s) est (sont) généralement utilisé(s) en fonction de l'application souhaitée pour les membranes en alumine poreuse.

Ce ou ces post-traitement(s) peut(peuvent) être de nature chimique pour ajuster la taille finale des pores, comme cela est décrit dans le document de Y. ZHAO et al., Materials Letters, 2005, 59, 40 - 43 ; dans le document de H. MASUDA et M. SATOH, Japan Journal of Applied Physics, 1996, 35, L 126-129 ; et dans le document de T.T. XY, R.D. PINER et R.S. RUOFF, Langmuir, 2003, 19, 1443-1445 ; ou pour ouvrir la membrane poreuse ou de nature thermique pour homogénéiser la composition chimique.

De tels post-traitements sont bien connus de l'homme du métier dans ce domaine de la technique et nous ne les décrirons donc pas tous en détail.

Nous ne traiterons ici que du cas des traitements chimiques d'ouverture et d'ajustement du diamètre des pores et d'ouverture de la membrane.

L'ajustement du diamètre final des pores est obtenu par traitement chimique, par exemple, à l'aide d'une solution d'acide phosphorique (H₃PO₄ 5%w).

La membrane en alumine poreuse est plongée dans la solution d'acide à température ambiante pour une durée définie par exemple de 30 minutes.

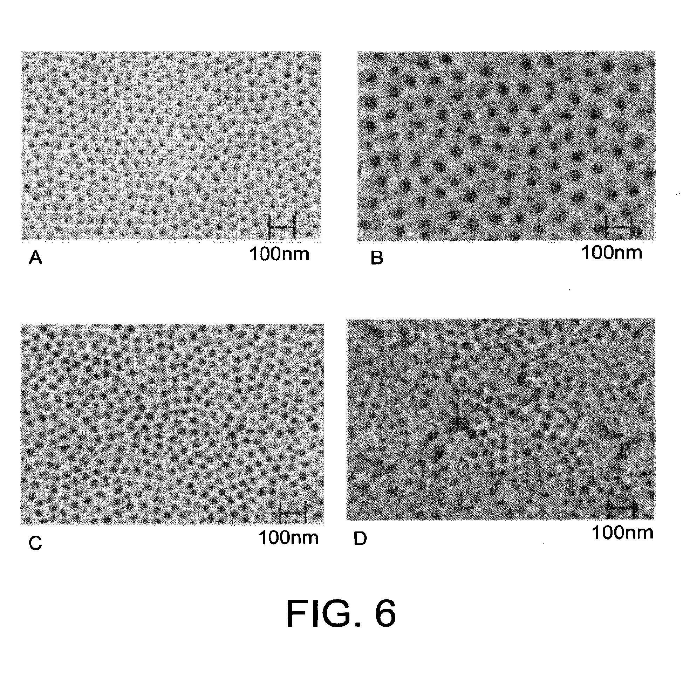

L'attaque chimique dissout les parois des pores provoquant l'augmentation progressive du diamètre des pores comme cela est montré sur la Figure 6 (Figures 6A, 6B, 6C, 6D). Néanmoins, une attaque chimique prolongée, pendant 45 minutes, détériore la membrane comme cela ressort de la Figure 6D.

L'intérêt de cette technique est de pouvoir ajuster le diamètre des pores en fonction du temps d'attaque.

Rappelons que la morphologie des membranes en Alumine anodique poreuse (AAO) est parfaitement définie par 4 paramètres, à savoir : la distance interpores ou Dᵢₙₜ, le diamètre d'un pore Dₚ, la profondeur des canaux L_{c} et l'épaisseur de la couche barrière L_{b} d'aluminium résiduel (voir Figure 1)

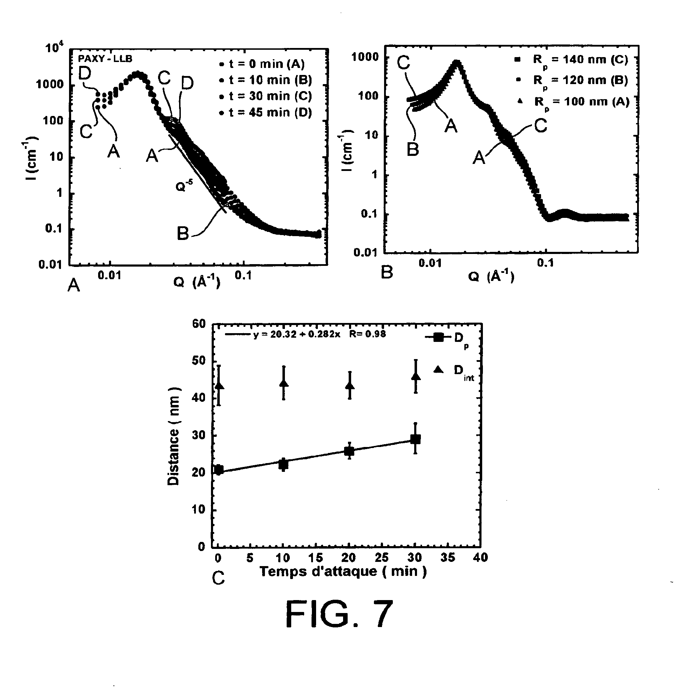

Dₚ varie linéairement avec le temps d'attaque alors que Dᵢₙₜ reste constant comme cela est montré sur la Figure 7C.

Les mesures par DNPA, montrées sur la Figure 7A, confirment les résultats MEB : le pic de structure, et donc Dᵢₙₜ, est inchangé alors que l'intensité du second pic est d'autant plus importante que le temps d'attaque augmente. L'intensité du second pic est d'autant plus grande que Dₚ augmente.

Néanmoins, l'observation au MEB est indispensable pour compléter la mesure par DNPA qui ne permet pas de détecter que la membrane attaquée pendant 45 minutes est détériorée en surface.

Un autre traitement qui peut être réalisé sur la membrane en alumine anodique poreuse (AAO) est l'ouverture de cette membrane poreuse.

En effet, un des intérêts majeurs des AAO est de pouvoir obtenir un système poreux ouvert des deux côtés de la membrane. Pour ouvrir la membrane poreuse, la technique usuelle est d'éliminer, dans un premier temps, l'aluminium résiduel puis d'ouvrir la couche barrière comme cela est décrit dans le document de T.T. XY, R.D. PINER et R.S. RUOFF, Langmuir, 2003, 19, 1443-1445, déjà cité.

Une autre méthode a été suggérée pour simplifier l'ouverture des pores en une seule étape, le principe consiste à détacher électriquement la membrane de l'aluminium résiduel.

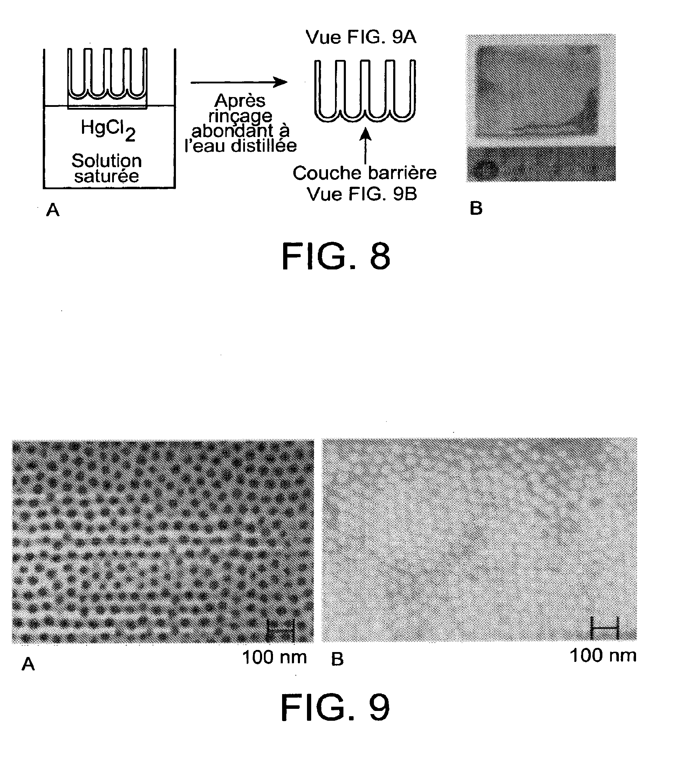

Nous décrivons dans ce qui suit la technique usuelle pour ouvrir la membrane dans laquelle dans une première étape, on élimine l'aluminium résiduel, puis dans une deuxième étape, on ouvre la couche barrière (voir Figure 8).

La première étape consiste à éliminer l'aluminium résiduel par une attaque chimique d'oxydoréduction à l'aide par exemple d'une solution saturée de dichlorure de mercure (HgCl₂).

Un mélange à base de dichlorure de cuivre (CuCl₂) peut également être utilisé comme cela est mentionné dans le document de T.T. XY déjà cité.

Le principe de ce traitement consiste à plonger la membrane dans la solution saturée et d'attendre qu'il n'y ait plus d'aluminium en contact avec la membrane.

Dans le protocole décrit pour l'anodisation, on a vu que l'aluminium initial est anodisé sur les deux faces (voir Figures 4B, 5A, 5B).

En réalité, l'anodisation se produit sur les quatre faces de l'aluminium piégeant l'aluminium résiduel derrière les quatre faces d'alumines. La suppression de l'aluminium est alors difficile et la plaque se fracture en de nombreux endroits.

Dans le cas où la membrane finale est quasi-transparente (voir Figure 4C), l'aluminium résiduel est inaccessible puisqu'il est piégé au coeur de la membrane.

Ce protocole a donc été modifié pour n'anodiser l'aluminium que d'un seul côté pour faciliter la suppression de l'aluminium résiduel.

L'aluminium est recouvert, sur une des faces, d'une résine protectrice dès la première anodisation.

Cette couche de protection est renouvelée avant la 2^{ème} anodisation. La résine est ensuite éliminée juste avant d'immerger la membrane dans la solution saturée en HgCl₂ (Figure 8A).

Une fois l'aluminium éliminé, la membrane est rincée abondamment à l'eau distillée.

A la fin de cette étape, la membrane est parfaitement transparente (voir Figure 8B).

En particulier, le dos de la membrane qui se situait à l'interface alumine/aluminium révèle alors la couche barrière qui est constituée du bas des pores.

Sur les Figures 9A et 9B, qui sont des images MEB d'une membrane 20V_-10°C_20h_H₂SO₄, on observe que la face supérieure de la membrane révèle la structure poreuse débouchant de part et d'autre (Figure 9A) tandis que la face inférieure révèle la couche barrière, et plus particulièrement le dos des pores. Cette face est obstruée par une fine couche barrière (Figure 9B).

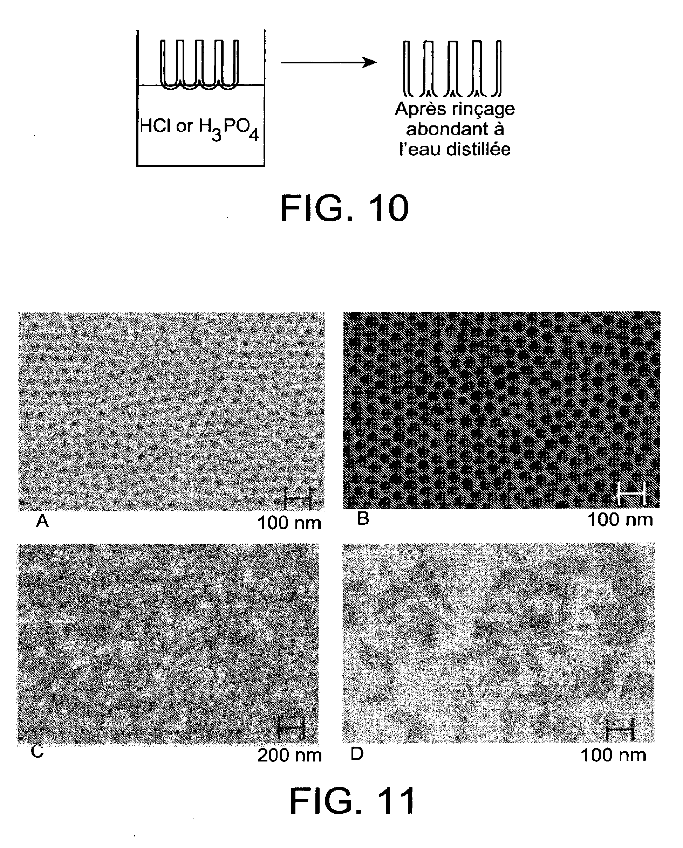

L'étape suivante consiste à ouvrir la couche barrière en immergeant la membrane, par exemple dans une solution d'acide phosphorique (H₃PO₄ 5% pds). Cette étape est similaire à celle au cours de laquelle est réalisé l'ajustement du diamètre des pores (voir Figure 10).

Il s'agit de contrôler la durée de l'attaque de façon à ne pas endommager la structure poreuse.

La durée du traitement doit être adaptée en fonction des conditions d'élaboration de la membrane dans la mesure où l'épaisseur de la couche barrière dépend de la tension d'élaboration.

Pour les membranes 20V_-10°C_20h_H₂SO₄, selon la nomenclature indiquée plus haut, la durée optimum d'attaque est 30 minutes (voir Figure 11 et notamment Figure 11B).

L'ouverture de la couche barrière est montrée sur la Figure 11 qui présente des images au MEB de la face arrière d'une membrane 20V_-10°C_20h_H₂SO₄ immergée dans une solution d'acide phosphorique à 5% en poids pendant 20 minutes (Figure 11A), pendant 30 minutes (Figure 11B) (la couche barrière est ouverte), pendant 45 minutes (Figure 11C), et pendant une heure (Figure 11D) (la structure poreuse est endommagée). Un cliché de la membrane avant attaque chimique est présenté sur la Figure 9B.

Comme on l'a indiqué plus haut, la conductivité sous confinement peut être optimisée en choisissant des polymères électrolytes de plus faibles concentrations en sel, tels que le P(OE)₁₂LiTFSI et le P(OE)₁₆LiTFSI.

La membrane à électrolyte, par exemple à polymère, selon l'invention telle qu'elle a été décrite plus haut peut être utilisée dans tout système, électrochimique mettant en oeuvre un électrolyte polymère (Figure 12).

Ce système électrochimique peut être notamment un accumulateur électrochimique rechargeable tel qu'un accumulateur ou une batterie au lithium, qui outre la membrane à électrolyte, par exemple à électrolyte polymère telle que définie plus haut comprend une électrode positive ; une électrode négative ; généralement des collecteurs de courant (7,8), généralement en cuivre pour l'électrode négative, ou en aluminium pour l'électrode positive, qui permettent la circulation des électrons, et donc la conduction électronique, dans le circuit extérieur (9) ; et généralement un séparateur permettant d'empêcher le contact entre les électrodes et donc les courts-circuits, ces séparateurs peuvent être des membranes polymères microporeuses.

L'électrode négative peut être constituée par du lithium métal en tant que matière électrochimiquement active, dans le cas des accumulateurs lithium-métal, sinon l'électrode négative peut comprendre en tant que matière électrochimiquement active, des matériaux d'intercalation tels que le carbone graphite (C_{gr}), ou de l'oxyde de titane lithié (Li₄Ti₅O₁₂) dans le cas des accumulateurs basés sur la technologie lithium-ion.

L'électrode positive comprend généralement, en tant que matière électrochimiquement active, des matériaux d'intercalation du lithium tels que des oxydes lamellaires de métaux de transition lithiés, des olivines ou phosphates de fer lithiés (LiFePO₄) ou des spinelles (par exemple, le spinelle LiNi_{0,5}Mn_{1,5}O₄).

Plus précisément, les électrodes, dans le cas où elles ne sont pas constituées par du lithium métallique, comprennent un liant qui est généralement un polymère organique, une matière électrochimiquement active d'électrode positive ou négative, éventuellement un ou des additif(s) conducteur(s) électronique(s), et un collecteur de courant.

Dans l'électrode positive, la matière électrochimiquement active peut être choisie parmi les composés déjà cités plus haut dans la présente description ; et parmi LiCoO₂ ; les composés dérivés de LiCoO₂ obtenus par substitution de préférence par Al, Ti, Mg, Ni et Mn, par exemple LiAlₓNi_{y}Co_{(1-x-y)}O₂ ou x <0,5 et y <1, LiNiₓMnₓCo₁₋₂ₓO₂ ; LiMn₂O₄ ; LiNiO₂ ; les composés dérivés de LiMn₂O₄ obtenus par substitution de préférence par Al, Ni et Co ; LiMnO₂ ; les composés dérivés de LiMnO₂ obtenus par substitution de préférence par Al, Ni, Co, Fe, Cr et Cu, par exemple LiNi_{0,5}O₂ ; les olivines LiFePO₄, Li₂FeSiO₄, LiMnPO₄, LiCoPO₄ ; les phosphates et les sulfates de fer hydratés ou non ; LiFe₂(PO₄)₃ ; les phosphates et les sulfates de vanadyle hydratés ou non, par exemple VOSO₄ et LiₓVOPO₄ ; nH₂O (0<x<3, 0<n<2) ; Li₍₁₊ₓ₎V₃O₈, 0<x<4 ; LiₓV₂O₅, nH₂O, avec 0<x<3 et 0<n<2 ; et leurs mélanges.

Dans l'électrode négative, la matière électrochimiquement active peut être choisie parmi les composés déjà cités plus haut dans la présente description ; et parmi les composés carbonés tels que les graphites naturels ou synthétiques et les carbones désordonnés ; les alliages de lithium de type LiₓM avec M=Sn, Sb, Si; les composés LiₓCu₆Sn₅ avec 0<x<13 ; les borates de fer ; les oxydes simples à décomposition réversible, par exemple CoO, Co₂O₃, Fe₂O₃ ; les pnicures, par exemple Li_{(3-x-y)}Co_{y}N, Li_{(3-x-y)}Fe_{y}N, LiₓMnP₄, LiₓFeP₂ ; LiₓFeSb₂ ; et les oxydes à insertion tels que les titanates, par exemple TiO₂, Li₄Ti₅O₁₂, LiₓNiP₂, LiₓNiP₃, MoO₃ et WO₃ et leurs mélanges, ou tout matériau connu de l'homme du métier dans ce domaine de la technique.

L'additif conducteur électronique éventuel peut être choisi parmi les particules métalliques telles que les particules d'Ag, le graphite, le noir de carbone, les fibres de carbone, les nanofils de carbone, les nanotubes de carbone et les polymères conducteurs électroniques, et leurs mélanges.

Les collecteurs de courant sont généralement en cuivre pour l'électrode négative, ou en aluminium pour l'électrode positive.

Les accumulateurs qui comprennent la membrane à électrolyte, par exemple à électrolyte polymère, selon l'invention peuvent être utilisés notamment pour la propulsion automobile et pour l'alimentation d'appareils électroniques portatifs tels que des ordinateurs, téléphones et consoles de jeux portables.

## Revendications

1. Membrane minérale à électrolyte dans laquelle :
- la membrane est une membrane poreuse en un oxyde de métal ou de métalloïde isolant électrique comprenant une première surface principale (1) et une deuxième surface principale (2) séparées par une épaisseur (3) ;
- des pores ou canaux traversants (4) ouverts à leurs deux extrémités (5,6), d'une largeur inférieure ou égale à 1000 nm, de préférence inférieure ou égale à 100 nm, orientés dans le sens de l'épaisseur (3) de la membrane et tous substantiellement parallèles, sur la totalité de l'épaisseur (3) de la membrane, relient la première surface principale (1) et la deuxième surface principale (2) ; et
- un électrolyte est confiné dans les pores (4) de la membrane ; un effet Gibbs-Thomson, et éventuellement un transport unidimensionnel (1D) dudit électrolyte depuis la première surface principale (1) vers la deuxième surface principale (2) ou depuis la deuxième surface principale (2) vers la première surface principale (1) étant obtenu(s) dans ledit électrolyte.

2. Membrane selon la revendication 1, dans laquelle ledit électrolyte comprend au moins un composé comprenant une fraction cristalline pour toute température inférieure à 100°C, avant qu'il ne soit confiné dans les pores de la membrane.

3. Membrane selon la revendication 1, dans laquelle ledit électrolyte comprend au moins un composé liquide ou amorphe en-dessous de 100°C.

4. Membrane selon l'une quelconque des revendications précédentes, dans laquelle les pores ou canaux présentent une mosaïcité d'orientation qui n'excède pas 10%.

5. Membrane selon la revendication 2, dans laquelle ladite fraction cristalline représente au moins 1% en masse, de préférence au moins 10% en masse du au moins un composé, de préférence encore au moins 20%, mieux au moins 30% en masse du au moins un composé.

6. Membrane selon l'une quelconque des revendications précédentes, dans laquelle la première et la deuxième surfaces principales sont planes et parallèles, la membrane est une membrane planaire et les pores ou canaux sont substantiellement alignés, ou alignés, perpendiculairement à ladite surface.

7. Membrane selon l'une quelconque des revendications précédentes, dans laquelle les pores ou canaux ont une largeur de 10 nm à 1000 nm, de préférence de 10 nm à 100 nm, de préférence encore de 20 à 50 nm, mieux de 30 à 40 nm.

8. Membrane selon l'une quelconque des revendications précédentes, dans laquelle les pores ou canaux sont des pores cylindriques; de préférence lesdits pores cylindriques ont une section circulaire ou substantiellement circulaire ou une section en ellipse.

9. Membrane selon l'une quelconque des revendications précédentes, dans laquelle les pores ou canaux ont une longueur de 100 nm à 900 µm, de préférence de 1 µm à 800 µm, de préférence encore de 1 µm à 500 µm, mieux de 100 µm à 300 µm.

10. Membrane selon l'une quelconque des revendications précédentes, dans laquelle les canaux ou pores sont disposés selon un motif régulier, par exemple en rangées ou selon une matrice.

11. Membrane selon l'une quelconque des revendications précédentes, dans laquelle la distance interpores est de l'ordre de grandeur de la largeur, par exemple du diamètre, des pores ; de préférence la distance interpores est de 10 nm à 1000 nm, de préférence de 10 nm à 100 nm, de préférence encore de 20 à 50 nm, mieux de 30 nm à 40 nm.

12. Membrane selon l'une quelconque des revendications précédentes, dans laquelle l'oxyde de métal ou de métalloïde isolant électrique est choisi parmi l'alumine, de préférence l'alumine anodique poreuse ou AAO, et la silice.

13. Membrane selon l'une quelconque des revendications 2 et 4 à 12, dans laquelle le composé comprenant une fraction cristalline est choisi parmi les liquides ioniques cristallins ou semi-cristallins, ou parmi les polymères semi-cristallins ou cristallins.

14. Membrane selon l'une quelconque des revendications 3 à 12, dans laquelle le composé liquide ou amorphe est choisi parmi les polymères liquides ou amorphes.

15. Membrane selon la revendication 13 ou 14, dans laquelle le polymère semi-cristallin ou cristallin ou liquide ou amorphe est choisi parmi les polymères qui permettent une bonne solvatation des ions de métaux alcalins tels que Li.

16. Membrane selon la revendication 13 ou 14, dans laquelle le polymère semi-cristallin ou cristallin ou liquide ou amorphe est choisi parmi les homopolymères et copolymères d'oxyde d'éthylène, et leurs dérivés.

17. Membrane selon l'une quelconque des revendications 12 à 16, dans laquelle le polymère a une masse molaire inférieure ou égale à 100 kg/mol.

18. Membrane selon l'une quelconque des revendications 12 à 17, dans laquelle le polymère a une masse molaire inférieure à sa masse d'enchevêtrement ; de préférence le polymère est choisi parmi les poly(oxyde d'éthylène)s de masse moléculaire inférieure à 3600 g/mol, de préférence de 44 à 2000 g/mol.

19. Membrane selon l'une quelconque des revendications 2 à 18, dans laquelle l'électrolyte comprend en outre un sel conducteur ionique ; de préférence le sel conducteur ionique est un sel de lithium, choisi par exemple parmi LiAsF₆, LiClO₄, LiBF₄, LiPF₆, LiBOB, Li ODBF, LiR_{F}SO₃ par exemple LiCF₃SO₃, LiCH₃SO₃, LiN(R_{F}SO₂)₂ par exemple LiN(CF₃SO₂)₂ (LiTFSl) ou LiN(C₂F₅SO₂)₂ (LiBETl), LiC(R_{F}SO₂)₃, par exemple LiC(CF₃SO₂)₃ (LiTFSM), dans lesquels R_{F} est choisi parmi un atome de fluor et un groupement perfluoroalkyle comprenant de 1 à 8 atomes de carbone, LiTFSI est l'acronyme de lithium bis(trifluorométhylsulfonyl)imide, LiBOB celui de lithium bis(oxalato)borate, Li ODBF celui de lithium oxalyl difluoroborate, LiBETI celui de lithium bis(perfluoroéthylsulfonyl)imide et Li TFSM celui de lithium bis (trifluoromethylsulfonyl)-méthylene; de préférence la concentration en sel conducteur ionique, dans l'électrolyte est de 1 à 50% en masse par rapport à la masse de l'électrolyte.

20. Membrane selon la revendication 19, dans laquelle l'électrolyte comprend un poly(oxyde d'éthylène) semi-cristallin avant d'être confiné et un sel de lithium, de préférence le LiTFSI ; de préférence le rapport des atomes de lithium aux atomes d'oxygène des groupements éthers du polyéthylène glycol est inférieur ou égal à 1/8, par exemple ce rapport peut être de 1/8, 1/12 ou 1/16.

21. Membrane selon l'une quelconque des revendications précédentes, dans laquelle l'électrolyte remplit totalement les pores ou canaux.

22. Membrane à électrolyte polymère solide selon l'une quelconque des revendications 13 à 21, dans laquelle l'électrolyte polymère est confiné dans les pores en immergeant la membrane poreuse en un oxyde de métal ou de métalloïde isolant électrique dans un excès d'électrolyte polymère fondu ou liquide, de préférence sous vide et à chaud.

23. Dispositif électrochimique, notamment accumulateur au lithium, par exemple accumulateur lithium-métal ou accumulateur lithium-ion, comprenant une membrane à électrolyte selon l'une quelconque des revendications 1 à 22, une électrode positive, et une électrode négative.

24. Utilisation d'une membrane minérale dans laquelle :
- la membrane est une membrane poreuse en un oxyde de métal ou de métalloïde isolant électrique comprenant une première surface principale (1) et une deuxième surface principale (2) séparées par une épaisseur (3) ;
- des pores ou canaux traversants (4) ouverts à leurs deux extrémités (5,6), d'une largeur inférieure ou égale à 1000 nm, de préférence inférieure ou égale à 100 nm, orientés dans le sens de l'épaisseur (3) de la membrane et tous substantiellement parallèles, sur la totalité de l'épaisseur (3) de la membrane, relient la première surface principale (1) et la deuxième surface principale (2) ;
pour obtenir un effet Gibbs-Thomson dans un électrolyte confiné dans les pores (4) de la membrane, et éventuellement un transport unidimensionnel (1D) dudit électrolyte depuis la première surface principale (1) vers la deuxième surface principale (2) ou depuis la deuxième surface principale (2) vers la première surface principale (1) ;
et dans laquelle ledit électrolyte comprend au moins un composé comprenant une fraction cristalline pour toute température inférieure à 100°C, avant qu'il ne soit confiné dans les pores de la membrane.

## Patentansprüche

1. Anorganische Elektrolytmembran, bei der:
- die Membran eine poröse Membran aus einem elektrisch isolierenden Metall- oder Metalloidoxid mit einer ersten Hauptfläche (1) und einer zweiten Hauptfläche (2), getrennt durch eine Dicke (3), ist;
- durchquerende Poren oder Kanäle (4) - offen an ihren beiden Enden (5, 6), mit einer Breite bzw. Weite unter oder gleich 1000 nm, vorzugsweise unter oder gleich 100 nm, ausgerichtet in der Richtung der Dicke (3) der Membran und alle im Wesentlichen parallel über die Gesamtheit der Dicke (3) der Membran -, die erste Hauptfläche (1) und die zweite Hauptfläche (2) verbinden ; und
- ein Elektrolyt in den Poren (4) der Membran enthalten bzw. eingeschlossen ist; man einen Gibbs-Thomson-Effekt und eventuell einen unidimensionalen 1D-Transport des genannten Elektrolyts von der ersten Hauptfläche (1) zur zweiten Hauptfläche (2) oder von der zweiten Hauptfläche (2) zur ersten Hauptfläche (1) in dem genannten Elektrolyt erhält.

2. Membran nach Anspruch 1, bei der das genannte Elektrolyt wenigstens eine Verbindung mit einer vor dem Einschließen in die Poren der Membran bei jeder Temperatur unter 100°C kristallinen Fraktion umfasst.

3. Membran nach Anspruch 1, bei der das genannte Elektrolyt wenigstens eine unter 100°C flüssige oder amorphe Verbindung umfasst.

4. Membran nach einem der vorhergehenden Ansprüche, bei der die Poren oder Kanäle eine Struktur aufweisen, deren Orientierungs mosaizität 10 % nicht überschreitet.

5. Membran nach Anspruch 2, bei der die genannte kristalline Fraktion einen Massenanteil von wenigstens 1 %, vorteilhafter wenigstens 10 % von wenigstens einer Verbindung, noch vorteilhafter einen Massenanteil von wenigstens 20 %, besser wenigstens 30 % von wenigstens einer Verbindung darstellt.

6. Membran nach einem der vorhergehenden Ansprüche, bei der die erste und die zweite Hauptfläche plan und parallel sind, die Membran eine planare Membran ist und die Poren oder Kanäle substantiell ausgerichtet sind, oder ausgerichtet sind, senkrecht zu der genannten Fläche.

7. Membran nach einem der vorhergehenden Ansprüche, bei der die Poren oder Kanäle eine Breite bzw. Weite von 10 nm bis 1000 nm, vorteilhafter von 10 nm bis 100 nm, noch vorteilhafter von 20 bis 50 nm, besser von 30 bis 40 nm haben.

8. Membran nach einem der vorhergehenden Ansprüche, bei der die Poren oder Kanäle zylindrische Poren sind ; vorzugsweise haben diese zylindrischen Poren einen runden oder substantiell runden oder einen elliptischen Querschnitt.

9. Membran nach einem der vorhergehenden Ansprüche, bei der die Poren oder Kanäle eine Länge von 100 nm bis 900 µm, vorteilhafter von 1 µm bis 800 µm, noch vorteilhafter von 1 µm bis 500 µm, besser von 100 µm bis 300 µm haben.

10. Membran nach einem der vorhergehenden Ansprüche, bei der die Poren oder Kanäle entsprechend einem regelmäßigen Muster angeordnet sind, zum Beispiel reihenförmig oder gemäß einer Matrix.

11. Membran nach einem der vorhergehenden Ansprüche, bei der der Poren-Zwischenabstand in der Größenordnung der Breite bzw. Weite, zum Beispiel des Durchmessers der Poren ist; vorzugsweise beträgt der Poren-Zwischenabstand 10 nm bis 1000 nm, vorteilhafter 10 nm bis 100 nm, noch vorteilhafte 20 bis 50 nm, besser 30 bis 40 nm.

12. Membran nach einem der vorhergehenden Ansprüche, bei der das elektrisch isolierende Metall- oder Metalloidoxid ausgewählt wird unter Aluminiumoxid, vorzugsweise porösem anodischem Aluminiumoxid oder AAO, und Siliziumdioxid.

13. Membran nach einem der vorhergehenden Ansprüche 2 und 4 bis 12, bei der die eine kristalline Fraktion umfassende Verbindung ausgewählt wird unter den kristallinen oder teilkristallinen ionischen Flüssigkeiten, oder unter den teilkristallinen oder kristallinen Polymeren.

14. Membran nach einem der Ansprüche 3 bis 12, bei der die flüssige oder amorphe Verbindung ausgewählt wird unter den flüssigen oder amorphen Polymeren.

15. Membran nach Anspruch 13 oder 14, bei der das teilkristalline oder kristalline oder flüssige oder amorphe Polymer ausgewählt wird unter den Polymeren, die eine gute Solvatation der Ionen von Alkalimetallen wie zum Beispiel Li ermöglichen.

16. Membran nach Anspruch 13 oder 14, bei der das teilkristalline oder kristalline oder flüssige oder amorphe Polymer ausgewählt wird unter den Homopolymeren und Copolymeren von Ethylenoxiden, und ihren Derivaten.

17. Membran nach Anspruch 12 bis 16, bei der das Polymer eine molare Masse unter oder gleich 100 kg/mol hat.

18. Membran nach einem der Ansprüche 12 bis 17, bei der die molare Masse des Polymers geringer ist als seine Verfitzungs- bzw. Verblockungmasse (masse d'enchevêtrement); vorzugsweise wird das Polymer ausgewählt unter den Polyethylenoxiden mit einer molekularen Masse unter 3600 g/mol, vorzugsweise von 44 bis 2000 g/mol.

19. Membran nach einem der Ansprüche 2 bis 18, bei der das Elektrolyt außerdem ein leitfähiges ionisches Salz umfasst; vorzugsweise ist das leitfähige ionische Salz ein Lithiumsalz, ausgewählt zum Beispiel unter LiAsF₆, LiClO₄, LiBF₄, LiPF₆, LiBOB, LiODBF, LiR_{F}SO₃ zum Beispiel LiCF₃SO₃, LiCH₃SO₃, LiN(R_{F}SO₂)₂ zum Beispiel LiN(CF₃SO₂)₂ (LiTFSI) oder LiN(C₂F₅SO₂)₂ (LiBETI), LiC(R_{F}SO₂)₃, zum Beispiel LiC(CF₃SO₂)₃ (LiTFSM), bei denen R_{F} ausgewählt wird unter einem Fluoratom und einer Perfluoralkylgruppe mit 1 bis 8 Kohlenstoffatomen, LiTFSI das Akronym ist von Lithium-bis(trifluormethylsulfonyl)imid, LiBOB dasjenige des Lithiumbis(oxalato)borats, LiODBF dasjenige des Lithiumoxalyldifluorborats, LiBETI dasjenige des Lithium-bis(perfluorethylsulfonyl)imids und LiTFSM dasjenige des Lithiumtbis-(trifluormethylsulfonyl)methid; vorzugsweise die Konzentration an leitfähigem ionischem Salz in dem Elektrolyt einem Massenanteil von 1 bis 50 % in Bezug auf die Masse des Elektrolyts entspricht.

20. Membran nach Anspruch 19, bei der das Elektrolyt ein teilkristallines Polyethylenoxid umfasst, bevor es eingeschlossen ist, und ein Lithiumsalz, vorzugsweise LiTFSI; das Verhältnis Lithiumatome zu Sauerstoffatome der Ethergruppen des Glykolpolyethylens ist vorzugsweise niedriger oder gleich 1/8, wobei dieses Verhältnis zum Beispiel 1/8, 1/12 oder 1/16 betragen kann.

21. Membran nach einem der vorhergehenden Ansprüche, bei der das Elektrolyt die Poren oder Kanäle ganz füllt.

22. Feste anorganische Elektrolytmembran nach einem der Ansprüche 13 bis 21, bei der das polymere Elektrolyt in die Poren eingeschlossen wird, indem die poröse Membran aus einem elektrisch isolierenden Metall- oder Metalloidoxid eingetaucht wird in einen Überschuss aus geschmolzenem oder flüssigem polymeren Elektrolyt, vorzugsweise unter Vakuum und im warmen Zustand.

23. Elektrochemische Vorrichtung, insbesondere Lithium-Akkumulator, zum Beispiel Lithium-Metall-Akkumulator oder Lithium-Ionen-Akkumulator, umfassend eine Elektrolytmembran nach einem der Ansprüche 1 bis 22, eine positive Elektrode und eine negative Elektrode.

24. Benutzung einer anorganischen Membran, bei der:
- die Membran eine poröse Membran aus einem elektrisch isolierenden Metall- oder Metalloidoxid mit einer ersten Hauptfläche (1) und einer zweiten Hauptfläche (2), getrennt durch eine Dicke (3), ist;
- durchquerende Poren oder Kanäle (4) - offen an ihren beiden Enden (5, 6), mit einer Breite bzw. Weite unter oder gleich 1000 nm, vorzugsweise unter oder gleich 100 nm, ausgerichtet in der Richtung der Dicke (3) der Membran und alle im Wesentlichen parallel über die Gesamtheit der Dicke (3) der Membran -, die erste Hauptfläche (1) und die zweite Hauptfläche (2) verbinden ;
um einen Gibbs-Thomson-Effekt in einem in den Poren (4) der Membran enthalten bzw. eingeschlossenen Elektrolyt und eventuell einen unidimensionalen 1D-Transport des genannten Elektrolyts von der ersten Hauptfläche (1) zur zweiten Hauptfläche (2) oder von der zweiten Hauptfläche (2) zur ersten Hauptfläche (1) zu erhalten ;
und bei der das genannte Elektrolyt wenigstens eine Verbindung mit einer vor dem Einschließen in die Poren der Membran bei jeder Temperatur unter 100°C kristallinen Fraktion umfasst.

## Claims

1. Mineral electrolyte membrane wherein:
- the membrane is a porous membrane made of an electrically insulating metal or metalloid oxide comprising a first main surface (1) and a second main surface (2) separated by a thickness (3);
- through pores or channels (4) open at their both ends (5,6), having a width of 1000 nm or less, preferably of 100 nm or less, oriented in the direction of the thickness (3) of the membrane and all substantially parallel over the entire thickness (3) of the membrane, connect the first main surface (1) and the second main surface (2); and
- an electrolyte is confined in the pores (4) of the membrane; a Gibbs-Thomson effect and optionally a one-dimensional (1D) transport of said electrolyte from the first main surface (1) to the second main surface (2) or from the second main surface (2) to the first main surface (1) being obtained in said electrolyte.

2. The membrane according to claim 1 wherein said electrolyte comprises at least one compound comprising a fraction that is crystalline at any temperature below 100°C, before being confined in the pores of the membrane.

3. The membrane according to claim 1 wherein said electrolyte comprises at least one compound that is liquid or amorphous below 100°C.

4. The membrane according to any one of the preceding claims wherein the pores or channels have an orientation mosaicity which does not exceed 10 %.

5. The membrane according to claim 2 wherein said crystalline fraction represents at least 1 % by weight, preferably at least 10 % by weight of the at least one compound, more preferably at least 20 %, better still at least 30 % by weight of the at least one compound.

6. The membrane according to any one of the preceding claims wherein the first and the second main surfaces are planar and parallel, the membrane is a planar membrane and the pores or channels are substantially aligned, or aligned, perpendicular to said surface.

7. The membrane according to any one of the preceding claims wherein the pores or channels have a width of 10 nm to 1000 nm, preferably of 10 nm to 100 nm, more preferably of 20 to 50 nm, better still of 30 to 40 nm.

8. The membrane according to any one of the preceding claims wherein the pores or channels are cylindrical pores; preferably said cylindrical pores have a circular or substantially circular cross-section or an elliptical cross-section.

9. The membrane according to any one of the preceding claims wherein the pores or channels have a length of 100 nm to 900 µm, preferably of 1 µm to 800 µm, more preferably of 1 µm to 500 µm, better still of 100 µm to 300 µm.

10. The membrane according to any one of the preceding claims wherein the channels or pores are arranged in a regular pattern, for example in rows or in an array.

11. The membrane according to any one of the preceding claims wherein the inter-pore distance is of the order of magnitude of the width, e.g. of the diameter of the pores; preferably the inter-pore distance is 10 nm to 1000 nm, preferably 10 nm to 100 nm, more preferably 20 to 50 nm, better still 30 nm to 40 nm.

12. The membrane according to any one of the preceding claims wherein the electrically insulating metal or metalloid oxide is chosen from among alumina, preferably porous anodic alumina or AAO, and silica.

13. The membrane according to any one of claims 2 and 4 to 12 wherein the compound comprising a crystalline fraction is chosen from among crystalline or semi-crystalline ionic liquids, or from among semi-crystalline or crystalline polymers.

14. The membrane according to any one of claims 3 to 12 wherein the liquid or amorphous compound is chosen from among liquid or amorphous polymers.

15. The membrane according to claim 13 or 14 wherein the semi-crystalline or crystalline or liquid or amorphous polymer is chosen from among polymers allowing good solvation of the ions of alkaline metals such as Li.

16. The membrane according to claim 13 or 14 wherein the semi-crystalline or crystalline or liquid or amorphous polymer is chosen from among the homopolymers and copolymers of ethylene oxide, and the derivatives thereof.

17. The membrane according to any one of claims 12 to 16 wherein the molar mass of the polymer is equal to or less than 100 kg/mol.

18. The membrane according to any one of claims 12 to 17 wherein the molar mass of the polymer is lower than its entanglement mass; preferably the polymer is chosen from among polyethylene oxides having a molecular weight of less than 3600 g/mol, preferably of 44 to 2000 g/mol.

19. The membrane according to any one of claims 2 to 18 wherein the electrolyte further comprises an ionic conductive salt; preferably the ionic conductive salt is a lithium salt, for example chosen from among LiAsF₆, LiClO₄, LiBF₄, LiPF₆, LiBOB, LiODBF, LiR_{F}SO₃ for example LiCF₃SO₃, LiCH₃SO₃, LiN(R_{F}SO₂)₂ for example LiN(CF₃SO₂)₂ (LiTFSI) or LiN(C₂F₅SO₂)₂ (LiBETI), LiC(R_{F}SO₂)₃, for example LiC(CF₃SO₂)₃ (LiTFSM), where R_{F} is chosen from among a fluorine atom and a perfluoroalkyl group comprising 1 to 8 carbon atoms, LiTFSI is the acronym for lithium bis(trifluoromethylsulfonyl)imide, LiBOB that of lithium bis(oxalato)borate, LiODBF that of lithium oxalyldifluoroborate; LiBETI that of lithium bis(perfluoroethylsulfonyl)imide, and LiTFSM that of lithium bis (trifluoromethylsulfonyl)methide; preferably the concentration of ionic conductive salt in the electrolyte is 1 to 50 % by weight relative to the weight of the electrolyte.

20. The membrane according to Claim 19 wherein the electrolyte comprises a polyethylene oxide that is semi-crystalline before being confined and a lithium salt preferably LiTFSI; preferably the ratio of lithium atoms to oxygen atoms of the ether groups of polyethylene glycol is equal to or less than 1:8, for example this ratio may be 1:8, 1:12 or 1:16.

21. The membrane according to any one of the preceding claims wherein the electrolyte fully fills the pores or channels.

22. The solid polymer electrolyte membrane according to any one of claims 13 to 21 wherein the polymer electrolyte is confined in the pores by immersing the porous membrane made of an electrically insulating metal or metalloid oxide into excess molten or liquid polymer electrolyte, preferably *in vacuo* and under heat.

23. An electrochemical device, especially a lithium storage battery, for example a lithium-metal storage battery or a lithium-ion storage battery comprising an electrolyte membrane according to any one of claims 1 to 22, a positive electrode, and a negative electrode.

24. The use of a mineral membrane wherein:
- the membrane is a porous membrane made of an electrically insulating metal or metalloid oxide comprising a first main surface (1) and a second main surface (2) separated by a thickness(3);
- through pores or channels (4) open at their both ends (5,6), having a width of 1000 nm or less, preferably of 100 nm or less, oriented in the direction of the thickness (3) of the membrane and all substantially parallel over the entire thickness (3) of the membrane, connect the first main surface (1) and the second main surface (2);
to obtain a Gibbs-Thomson effect in an electrolyte confined in the pores (4) of the membrane, and optionally a one-dimensional (1D) transport of said electrolyte from the first main surface (1) to the second main surface (2) or from the second main surface (2) to the first main surface (1);
and wherein said electrolyte comprises at least one compound comprising a fraction that is crystalline at any temperature below 100°C, before it is confined in the pores of the membrane.
